(19) Europäisches Patentamt
European Patent Office
Office européen des brevets

(11) EP 2 892 265 B1

(12) EUROPEAN PATENT SPECIFICATION

(45) Date of publication and mention
of the grant of the patent:
**25.07.2018 Bulletin 2018/30**

(51) Int Cl.:
***H04W 16/14*** (2009.01)    ***H04W 36/04*** (2009.01)

(21) Application number: **12883461.1**

(86) International application number:
**PCT/CN2012/080768**

(22) Date of filing: **30.08.2012**

(87) International publication number:
**WO 2014/032251 (06.03.2014 Gazette 2014/10)**

(54) **METHOD, DEVICE AND SYSTEM FOR PROCESSING COMMUNICATION SERVICE**

VERFAHREN, VORRICHTUNG UND SYSTEM ZUR VERARBEITUNG EINES KOMMUNIKATIONSDIENSTES

PROCÉDÉ, DISPOSITIF ET SYSTÈME POUR GÉRER UN SERVICE DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.07.2015 Bulletin 2015/28**

(73) Proprietor: **Huawei Technologies Co., Ltd.**
**Longgang District**
**Shenzhen, Guangdong 518129 (CN)**

(72) Inventors:
• **MA, Liyan**
**Shenzhen**
**Guangdong 518129 (CN)**

• **GUO, Fangfu**
**Shenzhen**
**Guangdong 518129 (CN)**

(74) Representative: **Pfenning, Meinig & Partner mbB**
**Patent- und Rechtsanwälte**
**Theresienhöhe 11a**
**80339 München (DE)**

(56) References cited:
**EP-A2- 1 734 780        EP-A2- 2 136 593**
**CN-A- 101 790 171      CN-A- 101 820 683**
**GB-A- 2 482 734         US-A1- 2005 130 662**
**US-A1- 2010 035 647   US-A1- 2010 317 359**
**US-A1- 2011 312 319**

## Description

## BACKGROUND

As requirements for radio services continuously grow, capacity expansion is implemented generally by deploying micro base stations in a macro network, so as to meet the continuously growing service requirements.

When a micro base station and a macro base station are deployed at a same frequency, because pilot channel (Pilot Channel) transmit powers of the macro base station and the micro base station are different, an uplink border and a downlink border of the macro base station and the micro base station are at different locations. The uplink border of the macro base station and the micro base station is defined as a location where signal to noise ratios (SNR, signal to noise ratio) of an uplink transmit signal of a user equipment (UE, user equipment) reaching the macro base station side and the micro base station side are the same. The downlink border of the macro base station and the micro base station is defined as a location where received signal code powers (RSCP, received signal code power), which are received by the UE, of the pilot channels of the macro base station and the micro base station are the same, and the UE will change a service cell when moving across the location. Inconsistent uplink border and downlink border of the macro base station and the micro base station may cause uplink interference from UEs at an edge of the macro base station to the micro base station, and also affect signal receiving of an uplink radio link (RL, radio link) of the macro base station, which results in a low service throughput rate of the macro base station.

GB 2 482 734 A describes a communication system in which a first base station controls a cell selection bias value based on signal measurements received from user devices within a cell operating range of the first base station. The signal measurement may be physical cell identifier, a reference signal received power (RSRP), geographic location of a user device or path loss measurement. The base station obtains data identifying the further base station having a different cell operating range that overlaps with the operating range of the first base station and determines the cell selection bias for at least one of the base stations based on the received signal measurements reports. The determined cell selection bias value is then transmitted to a user device within the cell operating range of the first base station. The bias is used to ensure user devices preferentially choose one cell over another, i.e. a pico/femto/low power cell over an umbrella/macro cell.

US 20117312319 A1 describes methods to support scheduling of transmissions from a pico base station or micro base station to a mobile terminal operating in a link imbalance zone where interference from macro base station is present. A method is provided to enable the mobile terminal to detect when it is in a link imbalance zone, and for triggering scheduling restrictions when the mobile terminal is in the link imbalance zone.

EP 1 734 780 A2 describes a mobile terminal transmission scheduling method for a mobile communication system. In each cell of this system, adjustment regions are provided externally adjacent to a soft-hand-over region. A mobile terminal (MT), upon entering this adjustment region, transmits an adjustment region scheduling request to a radio network controller (RNC) via a base station (BS) to which the MT currently belongs. The RNC transmits a scheduling adjustment start request to this BS. Upon receiving this request, this BS moves to an adjustment scheduling operating state and adjusts a scheduling control signal internally generated in the BS. The MT, upon exiting this adjustment region, transmits and adjustment region scheduling release request to the RNC via a BS to which the MT currently belongs. The RNC transmits a scheduling adjustment end request to this BS. Upon receiving this end request, this BS returns to a normal scheduling operating state.

US 2005/130662 A1 describes a hierarchical cell structure (HCS) cellular communications system which includes a macro cell encompassing a smaller micro cell that employ the same frequency band. The macro cell includes a macro cell base station, and the micro cell includes a micro cell base station. An uplink communication cell boundary between the macro cell and the micro cell is established, and a downlink communication cell boundary between the macro cell and the micro cell is established. A radio network controller determines whether a condition exists in the HCS system which indicates that the uplink and downlink micro cell boundaries should be unbalanced. If the condition is met or exists, the power and/or antenna beam tilt of a downlink transmission from the micro cell base station is reduced to unbalance the uplink and downlink micro cell boundaries. Alternatively, the radio network controller may employ an offset value to mathematically reduce mobile detected pilot power levels associated with the micro base station.

US 2010/035647 A1 describes that a small base node such as a Home Base Node (HNB), or femto cell, may reduce its transmit power in order to prevent co-channel or adjacent channel interference, or to limit its coverage area. Once the power is set, the HNB signal to a served Home User Equipment (HUE) its transmit Common Pilot Channel (CPICH) transmit power for accurate path loss estimation. When this power is outside of the permissible range, the HNB adjusts other parameters (such as Random Access Channel (RACH) constant value) to compensate for the error in signaled CPICH power, and thus compensate in that process the error in determining path loss. Similarly, if the uplink sensitivity is adjusted, to prevent interference, parameters would also be adjusted and signaled to the HUE to reflect the link imbalance. EP 2 136 593 A2 describes a femto base station which includes a downlink perch channel signal transmission power controller unit configured to change a transmission power of a downlink perch channel signal when a first condition is satisfied; and an uplink reception sensitivity controller unit configured to change an uplink reception sensitivity when a second condition is satisfied after the first condition is satisfied.

## SUMMARY

The present invention is as defined in the appended independent claims. Embodiments of the present invention provide a method for processing a communication service, which can reduce interference caused by a terminal active in communication at an edge of a macro base station to a micro base station, and improve a service throughput rate of the macro base station. The embodiments of the present invention further provide a corresponding apparatus and system.

The embodiments and/or examples of the following description which are not covered by the appended claims are considered as not being part of the present invention.

In a first aspect, an embodiment of the present invention provides a method for processing a communication service, including:

determining whether there is a communication service in an area between an uplink border and a downlink border of a macro base station and a micro base station sharing a same frequency; and
when there is a communication service in the area between the uplink border and the downlink border of the macro base station and the micro base station, processing the communication service according to a preset rule.

With reference to the first aspect, in a first possible implementation manner, before the determining whether there is a communication service in an area between an uplink border and a downlink border of a macro base station and a micro base station sharing a same frequency, the method further includes: obtaining an intra-frequency measurement report, active set information of a terminal, or signal quality of the macro base station and signal quality of the micro base station at a location where a terminal is located which are carried in a radio resource control connection request initiated by the terminal.

With reference to the first possible implementation manner of the first aspect, in a second possible implementation manner,
the area between the uplink border and the downlink border of the macro base station and the micro base station is divided into a macro-micro non-soft handover area and a macro-micro soft handover area according to base station information contained in an active set maintained by the terminal, where, in the macro-micro non-soft handover area, the active set of the terminal contains information of only the macro base station, and in the macro-micro soft handover area, the active set of the terminal contains information of both the micro base station and the macro base station; and
the determining whether there is a communication service in an area between an uplink border and a downlink border of a macro base station and a micro base station sharing a same frequency specifically includes: when an intra-frequency measurement report is obtained, determining that the terminal is already in a connected state when entering the area between the uplink border and the downlink border of the macro base station and the micro base station sharing a same frequency, and that a communication service of the terminal is in the macro-micro non-soft handover area.

With reference to the first possible implementation manner of the first aspect, in a third possible implementation manner,
the area between the uplink border and the downlink border of the macro base station and the micro base station is divided into a macro-micro non-soft handover area and a macro-micro soft handover area according to base station information contained in an active set maintained by the terminal, where, when the terminal is located in the macro-micro non-soft handover area, the active set of the terminal contains information of only the macro base station, and when the terminal is located in the macro-micro soft handover area, the active set of the terminal contains information of both the micro base station and the macro base station; and
the determining whether there is a communication service in an area between an uplink border and a downlink border of a macro base station and a micro base station sharing a same frequency specifically includes: when the active set information of the terminal is obtained, and the active set information of the terminal contains information of both the macro base station and the micro base station, determining that the terminal is already in a connected state when entering the area between the uplink border and the downlink border of the macro base station and the micro base station sharing a same frequency, and that the communication service of the terminal is in the macro-micro soft handover area.

With reference to the first possible implementation manner of the first aspect, in a fourth possible implementation manner,
the determining whether there is a communication service in an area between an uplink border and a downlink border of a macro base station and a micro base station sharing a same frequency specifically includes: when a sum of the signal quality of the micro base station at the location where the terminal is located, which is carried in the radio resource control connection request, and a fixed signal quality offset, is greater than or equal to the signal quality of the macro base station at the location where the terminal is located, determining that there is a communication service between the uplink border and the downlink border of the macro base station and the micro base station sharing a same frequency, and that the radio resource control connection request of the terminal is initiated in the area between the uplink border and the downlink border of the macro base station and the micro base station sharing a same frequency.

With reference to the second or third possible implementation manner of the first aspect, in a fifth possible implementation manner,

the processing the communication service according to a preset rule specifically includes: handing over the communication service to an inter-frequency co-coverage macro base station.

With reference to the fourth possible implementation manner of the first aspect, in a sixth possible implementation manner,

the processing the communication service according to a preset rule specifically includes: redirecting the communication service to an inter-frequency co-coverage macro base station by using a radio resource control protocol.

With reference to the first aspect and any one of the first possible implementation manner to the fourth possible implementation manner of the first aspect, in a seventh possible implementation manner,

the processing the communication service according to a preset rule specifically includes:

obtaining parameters used to calculate a desensitization intensity, and calculating a desensitization intensity according to the parameters used to calculate a desensitization intensity; and

reducing a receiver sensitivity of the micro base station according to the calculated desensitization intensity, to make the uplink border and the downlink border of the macro base station and the micro base station coincide.

With reference to the fifth or sixth possible implementation manner of the first aspect, in an eighth possible implementation manner, after the handover or redirecting of the communication service fails, the method further includes: obtaining parameters used to calculate a desensitization intensity, and calculating a desensitization intensity according to the parameters used to calculate a desensitization intensity; and reducing a receiver sensitivity of the micro base station according to the calculated desensitization intensity, to make the uplink border and the downlink border of the macro base station and the micro base station coincide.

With reference to the seventh or eighth possible implementation manner of the first aspect, in a ninth possible implementation manner, the method further includes:

periodically querying communication services in the area between the uplink border and the downlink border of the macro base station and the micro base station sharing a same frequency; and

when it is found that there is no communication service in the area between the uplink border and the downlink border of the macro base station and the micro base station sharing a same frequency, restoring the receiver sensitivity of the micro base station, to make the uplink border of the macro base station and the micro base station return to an original location.

With reference to the second or third possible implementation manner of the first aspect, in a tenth possible implementation manner,

the processing the communication service according to a preset rule specifically includes:

directly or indirectly reducing a transmit power of the terminal when the terminal active in the communication service is in the macro-micro non-soft handover area.

With reference to the second or third possible implementation manner of the first aspect, in an eleventh possible implementation manner,

the processing the communication service according to a preset rule specifically includes:

re-configuring a power offset of a dedicated physical control channel of the macro base station when the terminal active in the communication service is in the macro-micro soft handover area.

In a second aspect, an embodiment of the present invention provides a network control apparatus, including:

a determining unit, configured to determine whether there is a communication service in an area between an uplink border and a downlink border of a macro base station and a micro base station sharing a same frequency; and

a processing unit, configured to: when the determining unit determines that there is a communication service in the area between the uplink border and the downlink border of the macro base station and the micro base station, process the communication service according to a preset rule.

With reference to the second aspect, in a first possible implementation manner, the apparatus further includes an obtaining unit, where

the obtaining unit is configured to obtain, before the determining unit determines whether there is a communication service in the area between the uplink border and the downlink border of the macro base station and the micro base station sharing a same frequency, an intra-frequency measurement report, active set information of a terminal, or signal quality of the macro base station and signal quality of the micro base station at a location where a terminal is located which are carried in a radio resource control connection request initiated by the terminal.

With reference to the first possible implementation manner of the second aspect, in a second possible implementation manner,
the area between the uplink border and the downlink border of the macro base station and the micro base station is divided into a macro-micro non-soft handover area and a macro-micro soft handover area according to base station information contained in an active set maintained by the terminal, where, when the terminal is located in the macro-micro non-soft handover area, the active set of the terminal contains information of only the macro base station, and when the terminal is located in the macro-micro soft handover area, the active set of the terminal contains information of both the micro base station and the macro base station; and
the determining unit is specifically configured to: when the obtaining unit obtains an intra-frequency measurement report, determine that the terminal is already in a connected state when entering the area between the uplink border and the downlink border of the macro base station and the micro base station sharing a same frequency, and that the communication service of the terminal is in the macro-micro non-soft handover area.

With reference to the first possible implementation manner of the second aspect, in a third possible implementation manner,
the area between the uplink border and the downlink border of the macro base station and the micro base station is divided into a macro-micro non-soft handover area and a macro-micro soft handover area according to base station information contained in an active set maintained by the terminal, where, when the terminal is located in the macro-micro non-soft handover area, the active set of the terminal contains information of only the macro base station, and when the terminal is located in the macro-micro soft handover area, the active set of the terminal contains information of both the micro base station and the macro base station; and
the determining unit is specifically configured to: when the obtaining unit obtains the active set information of the terminal, and the active set information of the terminal contains information of both the macro base station and the micro base station, determine that the terminal is already in a connected state when entering the area between the uplink border and the downlink border of the macro base station and the micro base station sharing a same frequency, and that the communication service of the terminal is in the macro-micro soft handover area.

With reference to the first possible implementation manner of the second aspect, in a fourth possible implementation manner,
the determining unit is specifically configured to: when a sum of the signal quality, which is obtained by the obtaining unit and carried in the radio resource control connection request, of the micro base station at the location where the terminal is located, and a fixed signal quality offset, is greater than or equal to the signal quality of the macro base station at the location where the terminal is located, determine that there is a communication service between the uplink border and the downlink border of the macro base station and the micro base station sharing a same frequency, and that the radio resource control connection request of the terminal is initiated in the area between the uplink border and the downlink border of the macro base station and the micro base station sharing a same frequency.

With reference to the second or third possible implementation manner of the second aspect, in a fifth possible implementation manner,
the processing unit is specifically configured to hand over the communication service to an inter-frequency co-coverage macro base station.

With reference to the fourth possible implementation manner of the second aspect, in a sixth possible implementation manner,
the processing unit is specifically configured to redirect the communication service to an inter-frequency co-coverage macro base station by using a radio resource control protocol.

With reference to the second aspect and any one of the first to the sixth possible implementation manners of the second aspect, in a seventh possible implementation manner,
the processing unit includes:

an obtaining subunit, configured to obtain parameters used to calculate a desensitization intensity;
a calculating subunit, configured to calculate a desensitization intensity according to the parameters obtained by the obtaining subunit and used to calculate a desensitization intensity; and
a sensitivity adjusting unit, configured to reduce a receiver sensitivity of the micro base station according to the desensitization intensity calculated by the calculating subunit, to make the uplink border and the downlink border of the macro base station and the micro base station coincide.

With reference to the seventh possible implementation manner of the second aspect, in an eighth possible implementation manner,
the processing unit further includes:

a query subunit, configured to periodically query communication services in the area between the uplink border and the downlink border of the macro base station and the micro base station sharing a same frequency; and
the sensitivity adjusting unit is configured to: when the query subunit finds that there is no communication service in the area between the uplink border and the downlink border of the macro base station and the micro base station sharing a same frequency, restore the receiver sensitivity of the micro base station, to make the uplink border of the macro base station and the micro base station return to an original location.

With reference to the second or third possible implementation manner of the second aspect, in a ninth possible implementation manner,
the processing unit is specifically configured to directly or indirectly reduce a transmit power of the terminal when the terminal active in the communication service is in the macro-micro non-soft handover area.

With reference to the second or third possible implementation manner of the second aspect, in a tenth possible implementation manner,
the processing unit is specifically configured to re-configure a power offset of a dedicated physical control channel of the macro base station when the terminal active in the communication service is in the macro-micro soft handover area.

In a third aspect, an embodiment of the present invention provides a computer storage medium, where the computer storage medium can store a program, and the program, when executed, includes a part of or all the steps of the above method for processing a communication service.

In a fourth aspect, an embodiment of the present invention provides a network control apparatus, which includes an input apparatus, an output apparatus, a memory, and a processor;
where the processor executes the following steps:

determining whether there is a communication service in an area between an uplink border and a downlink border of a macro base station and a micro base station sharing a same frequency; and
when there is a communication service in the area between the uplink border and the downlink border of the macro base station and the micro base station, processing the communication service according to a preset rule.

With reference to the fourth aspect, in a first possible implementation manner, the processor further executes the following steps:
obtaining an intra-frequency measurement report, active set information of a terminal, or signal quality of the macro base station and signal quality of the micro base station at a location where a terminal is located which are carried in a radio resource control connection request initiated by the terminal.

With reference to the first possible implementation manner of the fourth aspect, in a second possible implementation manner,
the area between the uplink border and the downlink border of the macro base station and the micro base station is divided into a macro-micro non-soft handover area and a macro-micro soft handover area according to base station information contained in an active set maintained by the terminal, where, when the terminal is located in the macro-micro non-soft handover area, the active set of the terminal contains information of only the macro base station, and when the terminal is located in the macro-micro soft handover area, the active set of the terminal contains information of both the micro base station and the macro base station; and
when obtaining an intra-frequency measurement report, the processor determines that the terminal is already in a connected state when entering the area between the uplink border and the downlink border of the macro base station and the micro base station sharing a same frequency, and that the communication service of the terminal is in the macro-micro non-soft handover area.

With reference to the first possible implementation manner of the fourth aspect, in a third possible implementation manner,
the area between the uplink border and the downlink border of the macro base station and the micro base station is divided into a macro-micro non-soft handover area and a macro-micro soft handover area according to base station information contained in an active set maintained by the terminal, where, when the terminal is located in the macro-micro non-soft handover area, the active set of the terminal contains information of only the macro base station, and when the terminal is located in the macro-micro soft handover area, the active set of the terminal contains information of both the micro base station and the macro base station; and
when obtaining the active set information of the terminal, and the active set information of the terminal contains information of both the macro base station and the micro base station, the processor determines that the terminal is already in a connected state when entering the area between the uplink border and the downlink border of the macro base station and the micro base station sharing a same frequency, and that the communication service of the terminal is in the macro-micro soft handover area.

With reference to the first possible implementation manner of the fourth aspect, in a fourth possible implementation manner,

when the processor obtains the signal quality of the macro base station and the signal quality of the micro base station at the location where the terminal is located which are carried in the radio resource control connection request initiated by the terminal, and a sum of the signal quality of the micro base station at the location where the terminal is located, which is carried in the radio resource control connection request, and a fixed signal quality offset, is greater than or equal to the signal quality of the macro base station at the location where the terminal is located, the processor determines that there is a communication service between the uplink border and the downlink border of the macro base station and the micro base station sharing a same frequency, and that the radio resource control connection request of the terminal is initiated in the area between the uplink border and the downlink border of the macro base station and the micro base station sharing a same frequency.

With reference to the second or third possible implementation manner of the fourth aspect, in a fifth possible implementation manner,

the processor hands over the communication service to an inter-frequency co-coverage macro base station.

With reference to the fourth possible implementation manner of the fourth aspect, in a sixth possible implementation manner,

the processor redirects the communication service to an inter-frequency co-coverage macro base station by using the radio resource control protocol.

With reference to the fourth aspect and any one of the first to the sixth possible implementation manners of the fourth aspect, in a seventh possible implementation manner,

the processor obtains parameters used to calculate a desensitization intensity, and calculates a desensitization intensity according to the parameters used to calculate a desensitization intensity; and reduces a receiver sensitivity of the micro base station according to the calculated desensitization intensity, to make the uplink border and the downlink border of the macro base station and the micro base station coincide.

With reference to the seventh possible implementation manner of the fourth aspect, in an eighth possible implementation manner,

the processor periodically queries communication services in the area between the uplink border and the downlink border of the macro base station and the micro base station sharing a same frequency; and when finding that there is no communication service in the area between the uplink border and the downlink border of the macro base station and the micro base station sharing a same frequency, restores the receiver sensitivity of the micro base station, to make the uplink border of the macro base station and the micro base station return to an original location.

With reference to the second or third possible implementation manner of the fourth aspect, in a ninth possible implementation manner,

the processor directly or indirectly reduces a transmit power of the terminal when the terminal active in the communication service is in the macro-micro non-soft handover area.

With reference to the second or third possible implementation manner of the fourth aspect, in a tenth possible implementation manner,

the processor re-configures a power offset of a dedicated physical control channel of the macro base station when the terminal active in the communication service is in the macro-micro soft handover area.

In the fifth aspect, the present invention provides a network system, a network control apparatus, a terminal, a macro base station, and a micro base station; where

the network control apparatus is the network control apparatus in the above technical solution.

In the embodiments of the present invention, whether there is a communication service in the area between the uplink border and the downlink border of the macro base station and the micro base station sharing a same frequency is determined; and when there is a communication service in the area between the uplink border and the downlink border of the macro base station and the micro base station, the communication service is processed according to the preset rule. Compared with the prior art where interference exists when a macro base station and a micro base station are deployed at a same frequency, by using the method provided in the embodiments of the present invention, a communication service is processed according to a preset rule, which can reduce interference caused by a terminal active in communication at an edge of a macro base station to a micro base station, and improve a service throughput rate of the macro base station.

**BRIEF DESCRIPTION OF DRAWINGS**

FIG. 1 is a schematic diagram of an embodiment of a method for processing a communication service according to an embodiment of the present invention;

FIG. 2 is a schematic diagram of an exemplary scenario according to an embodiment of the present invention;

FIG. 3 is a schematic diagram of an application scenario embodiment according to an embodiment of the present invention;

FIG. 4 is another schematic diagram of an application scenario embodiment according to an embodiment of the present invention;

FIG. 5 is another schematic diagram of an application scenario embodiment according to an embodiment of the present invention;

FIG. 6 is a schematic diagram of an embodiment of a network control apparatus according to an embodiment of the present invention;

FIG. 7 is a schematic diagram of another embodiment of a network control apparatus according to an embodiment of the present invention;

FIG. 8 is a schematic diagram of another embodiment of a network control apparatus according to an embodiment of the present invention;

FIG. 9 is a schematic diagram of another embodiment of a network control apparatus according to an embodiment of the present invention;

FIG. 10 is a schematic diagram of another embodiment of a network control apparatus according to an embodiment of the present invention; and

FIG. 11 is a schematic diagram of an embodiment of a network system according to an embodiment of the present invention.

## DESCRIPTION OF EMBODIMENTS

Embodiments of the present invention provide a method for processing a communication service, which can reduce interference caused by a terminal active in communication at an edge of a macro base station to a micro base station, and improve a service throughput rate of the macro base station. The embodiments of the present invention further provide a corresponding apparatus and system. The method, apparatus, and system will be respectively described in detail hereinafter. Corresponding elements in the respective figures are denoted by the same reference signs.

A network control apparatus provided in the embodiments of the present invention may be a base station controller (BSC, Base Station Controller) in a global system for mobile communications (GSM, global system of mobile communication), or a radio network controller (RNC, Radio Network Controller) in a code division multiple access (CDMA, code division multiple access) system, or a functional module integrated in an eNode in a long term evolution (LTE, long term evolution) system, where the functional module can execute all the functions executed by the network control apparatus provided in the embodiments of the present invention.

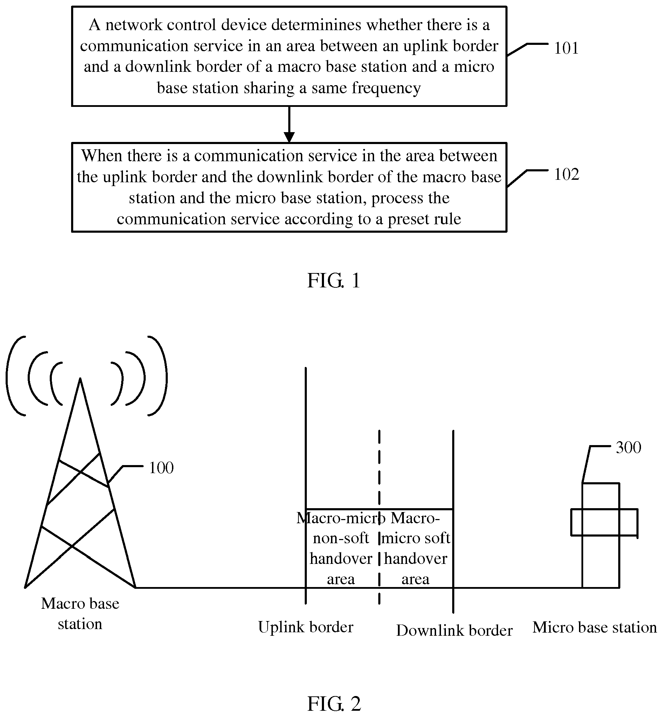

Referring to FIG. 1, an embodiment of a method for processing a communication service provided by the embodiment of the present invention includes the following steps.

101. A network control apparatus determines whether there is a communication service in an area between an uplink border and a downlink border of a macro base station and a micro base station sharing a same frequency.

The uplink border and the downlink border of the macro base station and the micro base station in the embodiment of the present invention refer to the uplink border of the macro base station and the micro base station, and the downlink border of the macro base station and the micro base station.

As shown in FIG. 2, when a micro base station 300 and a macro base station 100 are deployed at a same frequency, because pilot channel transmit powers, uplink loads, and receiver sensitivities of the macro base station 100 and the micro base station 300 may all be different, the uplink border and the downlink border of the macro base station 100 and the micro base station 300 are at different locations. As a result, an area exists between the uplink border and the downlink border of the macro base station 100 and micro base station 300 sharing a same frequency.

Each terminal maintains an active set, and the active set of a terminal contains information of base stations that can provide services to the terminal. When the terminal is in the area between the uplink border and the downlink border of the macro base station and the micro base station sharing a same frequency, the terminal is served by the co-frequency macro base station. However, in a process where the terminal moves from the uplink border to the downlink border, a control capability of the co-frequency micro base station over the terminal increases gradually. In the embodiment of the present invention, when the terminal just enters the uplink border, the active set of the terminal only contains the co-frequency macro base station, and when the terminal crosses a certain point, the co-frequency micro base station is added to the active set of the terminal. Therefore, the area between the uplink border and the downlink border of the macro base station and the micro base station sharing a same frequency may be divided into a macro-micro non-soft handover area and a macro-micro soft handover area according to the base station information contained in the active set of the terminal. When the terminal is in the macro-micro non-soft handover area, the active set of the terminal contains information of only the co-frequency macro base station; and when the terminal is in the macro-micro soft handover area, the active set of the terminal contains information of both the macro base station and the micro base station sharing a same frequency.

The macro-micro non-soft handover area refers to the non-soft handover area of the macro base station and the micro base station sharing a same frequency, and the macro-micro soft handover area refers to the soft handover area of the macro base station and the micro base station sharing a same frequency.

Whether there is a communication service in the area between the uplink border and the downlink border of the macro base station and the micro base station sharing a same frequency may be determined according to location information of the terminal. For example, whether there is a terminal active in communication in the area between the uplink border and the downlink border of the macro base station and the micro base station sharing a same frequency is determined by using the global positioning system (GPS, Global Positioning System) or in another manner, and if there is a terminal active in communication in the area, it indicates that there is a communication service in the area.

Before the determining whether there is a communication service in an area between an uplink border and a downlink border of a macro base station and a micro base station sharing a same frequency, an intra-frequency measurement report, active set information of the terminal, or signal quality of the macro base station and signal quality of the micro base station at a location where the terminal is located which are carried in a radio resource control connection request initiated by the terminal, may also be obtained.

When an intra-frequency measurement report is obtained, the determining whether there is a communication service in an area between an uplink border and a downlink border of a macro base station and a micro base station sharing a same frequency specifically includes: determining that the terminal is already in a connected state when entering the area between the uplink border and the downlink border of the macro base station and the micro base station sharing a same frequency, and that the communication service of the terminal is in the macro-micro non-soft handover area.

When active set information of the terminal is obtained, the determining whether there is a communication service in an area between an uplink border and a downlink border of a macro base station and a micro base station sharing a same frequency specifically includes: when active set information of the terminal is obtained, and the active set information of the terminal contains information of both the macro base station and the micro base station, determining that, the terminal is already in a connected state when entering the area between the uplink border and the downlink border of the macro base station and the micro base station sharing a same frequency, and that the communication service of the terminal is in the macro-micro soft handover area.

When signal quality of the macro base station and signal quality of the micro base station at the location where the terminal is located which are carried in a radio resource control connection request initiated by the terminal, are obtained, the determining whether there is a communication service in an area between an uplink border and a downlink border of a macro base station and a micro base station sharing a same frequency specifically includes: receiving a radio resource control (RRC, Radio Resource Control) connection request of the terminal, and when a sum of the signal quality, which is carried in the radio resource control connection request, of the micro base station at the location where the terminal is located, and a fixed signal quality offset, is greater than or equal to the signal quality of the macro base station at the location where the terminal is located, determining that there is a communication service between the uplink border and the downlink border of the macro base station and the micro base station sharing a same frequency, and that the radio resource control connection request of the terminal is initiated in the area between the uplink border and the downlink border of the macro base station and the micro base station sharing a same frequency.

When the network control apparatus obtains an intra-frequency measurement report, it indicates that a signal quality relationship of the micro base station and the macro base station has satisfied a condition expressed in the following formula: $10 \cdot Log M_{New} + CIO_{New} \geq W \cdot 10 \cdot Log\left(\sum_{i=1}^{N_A} M_i\right) + (1-W) \cdot 10 \cdot Log M_{Best} - (R_{1a} - H_{1a}/2),$

where, $M_{New}$ indicates a signal quality measurement result of a micro base station; $CIO_{New}$ indicates a signal quality offset between the macro base station and the micro base station; $M_i$ indicates quality measurement values of all base stations that can be used to comprehensively evaluate active set signal quality in the active set of the terminal; $N_A$ indicates the number of all base stations that can be used to comprehensively evaluate the active set signal quality in the active set; $M_{Best}$ indicates a signal quality measurement result of a best base station in the comprehensive evaluation of the active set signal quality; $W$ indicates a weight between the best base station and other base stations during the evaluation of the comprehensive signal quality of the active set; $R_{1a}$ indicates an intra-frequency measurement report threshold; and $H_{1a}$ indicates an intra-frequency measurement report hysteresis.

$M_{New} + CIO_{New}$ on the left side of the formula indicates the comprehensive signal quality of the micro base station; and the right side of the formula indicates a difference between the comprehensive signal quality of the base stations in the active set and a trigger threshold.

In general, the above formula indicates that: only when the comprehensive signal quality of the micro base station is greater than or equal to the difference between the comprehensive signal quality of the base stations in the active set and the trigger threshold, will the UE report an intra-frequency measurement report to the network control apparatus, and only when the terminal is in the macro-micro non-soft handover area can the relationship among all parameters in the formula satisfies the above formula.

Therefore, when the network control apparatus receives the intra-frequency measurement report, it can be judged that there is a communication service in the non-soft handover area.

For the macro-micro soft handover area, the network control apparatus monitors active sets of all controlled UEs, and when an active set of any one of the UEs contains information of both the macro base station and the micro base station, it indicates that the communication service of the UE is in the macro-micro soft handover area.

102. When there is a communication service in the area between the uplink border and the downlink border of the macro base station and the micro base station, process the communication service according to a preset rule.

The preset rule may include several cases: (1) moving the uplink border of the macro base station and the micro base station through desensitization, to make the uplink border and the downlink border of the macro base station and the micro base station coincide; (2) inter-frequency handover or redirecting; (3) combining step (2) and step (1), where the operation in step (2) is executed first, and the operation of desensitization in step (1) is executed after the inter-frequency handover or redirecting fails; (4) directly or indirectly reducing a transmit power of the terminal when the terminal active in the communication service is in the macro-micro non-soft handover area; or reconfiguring a power offset of a dedicated physical control channel of the macro base station when the terminal active in the communication service is in the macro-micro soft handover area.

Case (1) desensitization will be described below.

Desensitization means reducing receiver sensitivity. The desensitization in the embodiment of the present invention refers to reducing receiver sensitivity of the micro base station. Based on the definition of the uplink border of the macro base station and the micro base station that the signal to noise ratios of the uplink transmit signal of the UE at the uplink border reaching the macro base station side and the micro base station side are the same, when the receiver sensitivity of the micro base station is reduced, the previous signal to noise ratios of the uplink transmit signal of the UE at the uplink border reaching the micro base station side and the macro base station side are different. Therefore, for a new uplink border found according to the receiver sensitivity of the micro base station after sensitivity reduction, because the receiver sensitivity of the micro base station is reduced, the location of the new uplink border inevitably moves closer to the micro base station. In this way, the coincidence of the uplink border and the downlink border can be realized.

Actually, before the receiver sensitivity of the micro base station is reduced, it is firstly required to calculate the amount to be reduced from the receiver sensitivity of the micro base station to make the uplink border and the downlink border coincide. The amount that needs to be reduced from the receiver sensitivity of the micro base station is a desensitization intensity, and a specific process of calculating the desensitization intensity is as follows.

A formula of the desensitization intensity is:

$$\mathrm{TotalDesense}(n) = \{\ \mathrm{PCPICHPowerMacro}(n)\ -\ \mathrm{PCPICHPowerMicro}(n)\ \}\ +$$

$$\{\ \mathrm{AntGainMacro}(n) - \mathrm{AntGainMicro}(n)\ \} + \mathrm{BGNMacro}(n) - \mathrm{BGNMicro}(n).$$

Here, PCPICHPowerMacro(n) is a current pilot channel transmit power of the macro base station, measured in dbm; PCPICHPowerMicro(n) is a current pilot channel transmit power of the micro base station, measured in dbm; AntGainMacro is a macro antenna gain; AntGainMicro is a micro antenna gain; BGNMacro(n) is a current noise floor of the macro base station, measured in dbm; and BGNMicro(n) is a current noise floor of the micro base station, measured in dbm.

Firstly, the network control apparatus obtains parameters used to calculate a desensitization intensity, and calculates a desensitization intensity according to the parameters used to calculate a desensitization intensity. Because the desensitization intensity is the amount that needs to be reduced from the receiver sensitivity of the micro base station, when the calculated desensitization intensity is subtracted from the original receiver sensitivity of the micro base station, the receiver sensitivity of the micro base station is reduced, so that the uplink border and the downlink border of the macro base station and the micro base station coincide.

In the desensitization solution, desensitization is performed only when there is a communication service in the area between the uplink border and the downlink border, and no action is performed when there is no communication service. Compared with direct desensitization during deployment of the micro base station, this reduces the probability of uplink interference to the macro base station caused by the desensitization of the micro base station.

After the desensitization, communication services in the area between the uplink border and the downlink border of the macro base station and the micro base station sharing a same frequency are periodically queried.

When it is found that there is no communication service in the area between the uplink border and the downlink border of the macro base station and the micro base station sharing a same frequency, the desensitization is canceled, that is, the receiver sensitivity of the micro base station is restored, to make the uplink border of the macro base station and the micro base station return to an original location.

Case (2) inter-frequency handover and redirecting will be described below.

Inter-frequency handover is a processing solution for a communication service where the terminal is already in a connected state when entering the area between the uplink border and the downlink border of the macro base station and the micro base station sharing a same frequency.

The processing the communication service according to a preset rule specifically includes: handing over the communication service to an inter-frequency co-coverage macro neighboring cell.

The inter-frequency co-coverage macro neighboring cell is the macro base station that has the same coverage as, but a different working frequency from, the macro neighboring cell acting as the service cell in the embodiment of the present invention.

Redirecting is a processing solution for a communication service where a radio resource control RRC connection request of the terminal is initiated in the area between the uplink border and the downlink border of the macro base station and the micro base station sharing a same frequency.

The processing the communication service according to a preset rule specifically includes: redirecting the communication service to an inter-frequency co-coverage macro neighboring cell by using a radio resource control RRC protocol.

A specific process of redirecting is: the terminal sends an RRC connection request to the network control apparatus, where the connection request carries signal quality of a neighboring cell macro base station; when the network control apparatus determines, according to a neighboring cell indication, that the radio resource control RRC connection request of the terminal is initiated in the area between the uplink border and the downlink border of the macro base station and the micro base station sharing a same frequency, the network control apparatus sends an RRC reject message to the terminal, where the reject message carries a target frequency; and after the terminal receives the reject message, the service is redirected to the inter-frequency co-coverage neighboring cell macro base station of the target frequency.

Because interference is generated when the macro base station and the micro base station are deployed at a same frequency, interference of the UE in the micro base station may be eliminated after the redirecting or handover to the inter-frequency macro neighboring cell.

If both the inter-frequency handover and the redirecting fail, desensitization may further be performed in the area between the uplink border and the downlink border based on the solution in case (1). This is case (3).

Case (4) will be described below.

The processing the communication service according to a preset rule specifically includes:

directly or indirectly reducing a transmit power of the terminal when the terminal active in the communication service is in the macro-micro non-soft handover area; and
re-configuring a power offset of a dedicated physical control channel of the macro base station when the terminal active in the communication service is in the macro-micro soft handover area.

When the UE is in the macro-micro non-soft handover area, the micro base station is not added to the active set yet, and limiting the transmit power of the terminal directly can reduce the interference caused by the UE to the micro base station. Or, the transmit power of the terminal is reduced indirectly by reducing a service rate of the terminal; or by relocating the terminal to a dedicated channel (DCH, Dedicated Channel) from a high speed uplink packet access (HSUPA, high speed uplink packet access) channel. Because the service rate of the HSUPA channel is high and the service rate of the DCH channel is low, in this way, the transmit power of the terminal can also be reduced indirectly. In the embodiment of the present invention, only two examples of indirectly reducing the transmit power of the terminal are given, and actually, the transmit power of the terminal may be reduced by using other methods, and the method for reducing the transmit power of the terminal is not limited herein.

When the terminal is in the macro-micro soft handover area, the micro base station is added to the active set already and an uplink path loss from the terminal to the micro base station will be significantly smaller than the uplink path loss to the macro base station. In this case, power control of the micro base station plays a dominant role, and the UE may be required to reduce the transmit power, so as to meet the uplink signal-to-interference ratio (SIR, Signal to Interference Ratio) target of the micro base station. However, at this time, for the macro base station, the SIR received by the macro base station is very poor, and far lower than the SIR target thereof. Therefore, the uplink control channel of the UE cannot be correctly demodulated. If the dedicated physical control channel (DPCCH, Dedicated Physical Control Channel) cannot be normally demodulated, the terminal will be out of synchronization in the uplink of the macro base station, and even if the DPCCH can be normally demodulated, the high-speed dedicated physical control channel (HS-DPCCH, High-Speed Dedicated Physical Control Channel) cannot be normally demodulated, thereby affecting the throughput rate of terminals in the area. Therefore, in the macro-micro soft handover area, the power offset of the dedicated physical control channel of the macro base station may be re-configured, to ensure the received quality in the uplink of the macro base station, thereby ensuring the throughput rate of the terminal in the macro base station and preventing out-of-synchronization errors.

In the embodiment of the present invention, whether there is a communication service in the area between the uplink border and the downlink border of the macro base station and the micro base station sharing a same frequency is determined; and when there is a communication service in the area between the uplink border and the downlink border of the macro base station and the micro base station, the communication service is processed according to a preset rule. Compared with the prior art where interference exists when a macro base station and a micro base station are deployed at a same frequency, by using the method provided in the embodiment of the present invention, a communication service is processed according to a preset rule, which can reduce interference caused by a terminal active in communication at an edge of a macro base station to a micro base station, and improve a service throughput rate of the macro base station.

To help understanding, a specific application scenario will be taken as an example below to describe the process of processing a communication service in the present invention in detail.

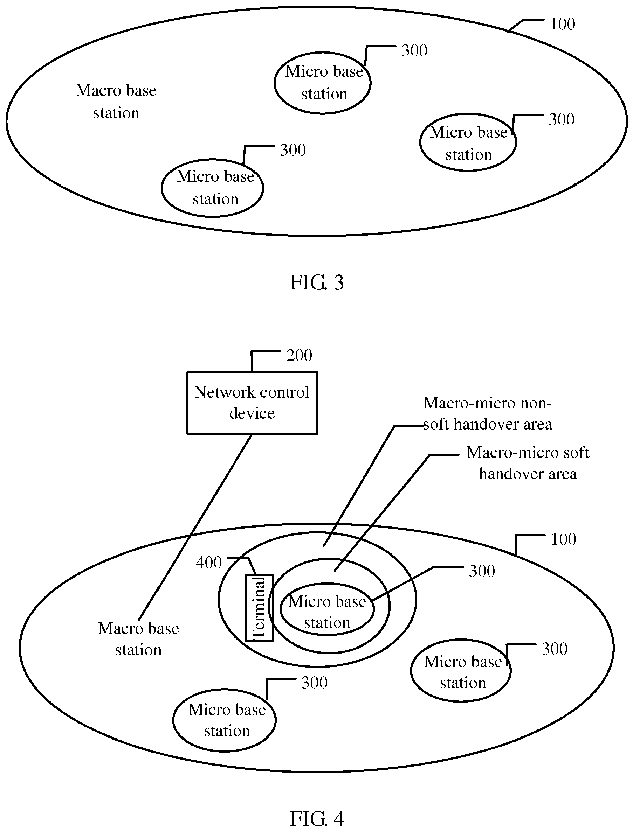

Referring to FIG. 3, a transmit power of a macro base station 100 is high, generally 20 watts (W), and therefore a coverage radius of the macro base station 100 is large, generally hundreds to thousands of meters. A transmit power of a micro base station 300 is low, generally lower than 5 W, and therefore a coverage radius of the micro base station 300 is small, generally tens to hundreds of meters only. In order to realize expansion of network capacity, micro base stations 300 may be deployed in the coverage of the macro base station 100. Taking a university campus as an example, a macro base station 100 whose signal covers the whole campus can be deployed, and co-frequency micro base stations 300 may be deployed in places with large numbers of subscribers, such as classrooms and dormitories, so as to meet the requirements of the subscribers.

Communication services of a terminal in the range of the macro base station 100 is controlled by the macro base station 100, and when the terminal enters the coverage of a micro base station 300, the communication service of the user terminal is controlled by the micro base station 300.

Referring to FIG. 4, taking the macro base station 100 and one of the micro base stations 300 as an example, when a terminal 400 enters an area between an uplink border and a downlink border of the macro base station 100 and micro base station 300 sharing a same frequency, if, at this time, the macro base station 100 is a base station providing service to the terminal 400 and the micro base station 300 is not yet added to the active set of the terminal 400, it indicates that the terminal 400 is in a macro-micro non-soft handover area. After the terminal 400 enters the macro-micro non-soft handover area, if a sum of the signal quality of the micro base station 300 and a set signal quality offset is greater than or equal to the signal quality of the macro base station 100, the terminal 400 sends an intra-frequency measurement report to a network control apparatus 200 via the macro base station 100. The network control apparatus 200, when receiving the intra-frequency measurement report, can judge that the terminal 400 enters the macro-micro non-soft handover area. When the network control apparatus 200 discovers by monitoring that the active set of the terminal 400 contains information of both the macro base station 100 and the micro base station 300, it indicates that the terminal 400 enters the macro-micro soft handover area.

When the network control apparatus 200 receives an RRC connection request, and judges that a sum of the signal quality of micro base station 300 and a fixed signal quality offset is greater than or equal to the signal quality of the macro base station 100 according to the signal quality of the macro base station 100 and the signal quality of the micro base station 300 which are carried in the connection request, the network control apparatus 200 can determine that the RRC connection request is initiated after the terminal 400 enters the area between the uplink border and the downlink border.

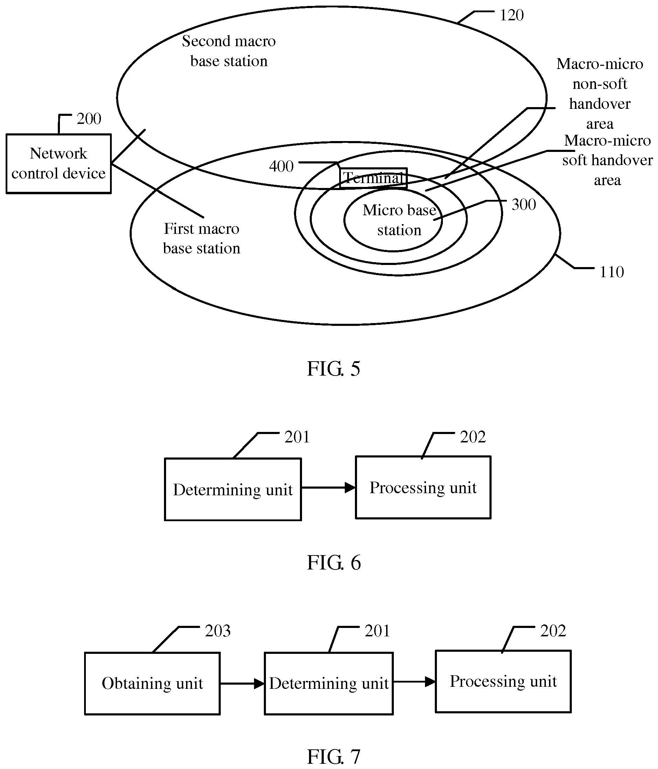

Referring to FIG. 5, a first macro base station 110 is deployed with a co-frequency micro base station 300, the first macro base station 110 has a different frequency from, but the same coverage as, a second macro base station 120, and a terminal 400 initiates a communication service in an area between an uplink border and a downlink border of the first macro base station 110 and the micro base station 300, and therefore, a network control apparatus redirects the communication service to the inter-frequency co-coverage second macro base station 120 by using a radio resource control RRC message. If the terminal 400 is already in a connected state when entering the area between the uplink border and the downlink border of the macro base station and the micro base station sharing a same frequency, the communication service is handed over to the inter-frequency co-coverage second macro base station 120.

The communication service, where the terminal 400 is already in a connected state when entering the area between the uplink border and the downlink border of the co-frequency first macro base station 110 and the micro base station 300, may also be processed by adopting the following solution: the network control apparatus directly or indirectly reduces a transmit power of the terminal 400 when the terminal active in the communication service is in a macro-micro non-soft handover area; and the network control apparatus re-configures a power offset of a dedicated physical control channel of the first macro base station 110 when the terminal 400 active in the communication service is in a macro-micro soft handover area. It should be noted that, the net work control apparatus only controls the macro base station, and the communication between the network control apparatus and the terminal needs to be accomplished through forwarding by the macro base station.

Through the processing of the communication service in the above application scenarios, it is described in detail that the technical solution provided by the embodiment of the present invention can reduce interference caused by a terminal active in communication at an edge of a macro base station to a micro base station, and improve a service throughput rate of the macro base station.

Referring to FIG. 6, an embodiment of a network control apparatus provided by the embodiment of the present invention includes: a determining unit 201 and a processing unit 202.

The determining unit 201 is configured to determine whether there is a communication service in an area between an uplink border and a downlink border of a macro base station and a micro base station sharing a same frequency.

The processing unit 202 is configured to: when the determining unit 201 determines that there is a communication service in the area between the uplink border and the downlink border of the macro base station and the micro base station, process the communication service according to a preset rule.

In the embodiment of the present invention, the determining unit 201 determines whether there is a communication service in the area between the uplink border and the downlink border of the macro base station and the micro base station sharing a same frequency; and when the determining unit 201 determines that there is a communication service in the area between the uplink border and the downlink border of the macro base station and the micro base station, the processing unit 202 processes the communication service according to the preset rule. Compared with the network control apparatus in the prior art, the network control apparatus provided in the embodiment of the present invention can reduce interference caused by a terminal active in communication at an edge of a macro base station to a micro base station, and improve a service throughput rate of the macro base station.

Based on the embodiment corresponding to FIG. 6, referring to FIG. 7, another embodiment of the network control apparatus provided by the embodiment of the present invention further includes an obtaining unit 203.

The obtaining unit 203 is configured to obtain, before the determining unit 201 determines whether there is a communication service in the area between the uplink border and the downlink border of the macro base station and the micro base station sharing a same frequency, an intra-frequency measurement report, active set information of the terminal, or signal quality of the macro base station and signal quality of the micro base station at a location where the terminal is located which are carried in a radio resource control connection request initiated by the terminal.

Based on the embodiment corresponding to FIG. 7, in a first optional embodiment of the network control apparatus provided by the embodiment of the present invention,

the area between the uplink border and the downlink border of the macro base station and the micro base station is divided into a macro-micro non-soft handover area and a macro-micro soft handover area according to base station information contained in an active set maintained by the terminal, where, in the macro-micro non-soft handover area, the active set of the terminal contains information of only the macro base station, and in the macro-micro soft handover area, the active set of the terminal contains information of both the micro base station and the macro base station; and the determining unit 201 is specifically configured to: when the obtaining unit 203 obtains an intra-frequency measurement report, determine that the terminal is already in a connected state when entering the area between the uplink border and the downlink border of the macro base station and the micro base station sharing a same frequency, and that the communication service of the terminal is in the macro-micro non-soft handover area.

Based on the embodiment corresponding to FIG. 7, in a second optional embodiment of the network control apparatus provided by the embodiment of the present invention,

the area between the uplink border and the downlink border of the macro base station and the micro base station is divided into a macro-micro non-soft handover area and a macro-micro soft handover area according to base station information contained in an active set maintained by the terminal, where, in the macro-micro non-soft handover area, the active set of the terminal contains information of only the macro base station, and in the macro-micro soft handover area, the active set of the terminal contains information of both the micro base station and the macro base station; and the determining unit 201 is specifically configured to: when the obtaining unit 203 obtains active set information of the terminal, and the active set information of the terminal contains information of both the macro base station and the micro base station, determine that the terminal is already in a connected state when entering the area between the uplink border and the downlink border of the macro base station and the micro base station sharing a same frequency, and that the communication service of the terminal is in the macro-micro soft handover area.

Based on the embodiment corresponding to FIG. 7, in a third optional embodiment of the network control apparatus provided by the embodiment of the present invention,

the determining unit 201 is specifically configured to: when a sum of the signal quality, which is obtained by the obtaining unit 203 and carried in a radio resource control connection request, of the micro base station at the location where the terminal is located, and a fixed signal quality offset, is greater than or equal to the signal quality of the macro base station at the location where the terminal is located, determine that there is a communication service between the uplink border and the downlink border of the macro base station and the micro base station sharing a same frequency, and that the radio resource control connection request of the terminal is initiated in the area between the uplink border and the downlink border of the macro base station and the micro base station sharing a same frequency.

Based on the first and second optional embodiments corresponding to FIG. 7, in another embodiment of the network control apparatus provided by the embodiment of the present invention,
the processing unit 202 is specifically configured to hand over the communication service to an inter-frequency co-coverage macro base station.

Based on the third optional embodiment corresponding to FIG. 7, in another embodiment of the network control apparatus provided by the embodiment of the present invention,
the processing unit 202 is specifically configured to redirect the communication service to an inter-frequency co-coverage macro base station by using the radio resource control protocol.

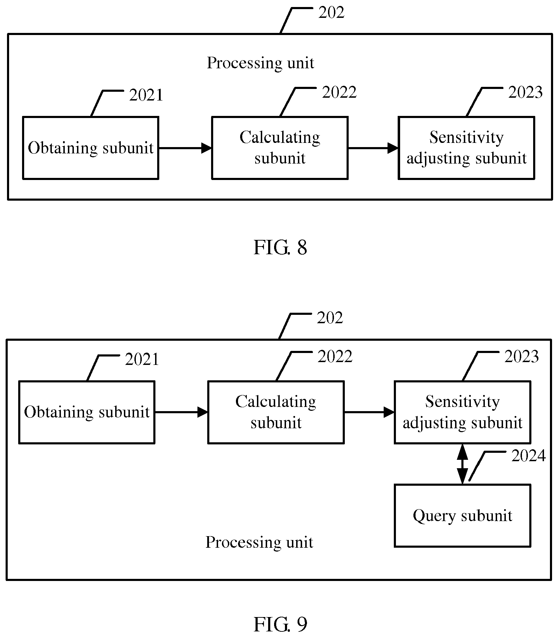

Based on all the above embodiments of the network control apparatus, referring to FIG. 8, in another embodiment of a network control apparatus provided by the embodiment of the present invention, the processing unit 202 includes: an obtaining subunit 2021, a calculating subunit 2022 and a sensitivity adjusting unit 2023.

The obtaining subunit 2021 is configured to obtain parameters used to calculate a desensitization intensity.

The calculating subunit 2022 is configured to calculate a desensitization intensity according to the parameters obtained by the obtaining subunit 2021 and used to calculate a desensitization intensity.

The sensitivity adjusting unit 2023 is configured to reduce a receiver sensitivity of the micro base station according to the desensitization intensity calculated by the calculating subunit 2022, to make the uplink border and the downlink border of the macro base station and the micro base station coincide.

Based on the embodiment corresponding to FIG. 8, referring to FIG. 9, in another embodiment of the network control apparatus provided by the embodiment of the present invention, the processing unit 202 further includes:
a query subunit 2024, configured to periodically query communication services in the area between the uplink border and the downlink border of the macro base station and the micro base station sharing a same frequency; and
the sensitivity adjusting unit 2023 is configured to: when the query subunit 2024 finds that there is no communication service in the area between the uplink border and the downlink border of the macro base station and the micro base station sharing a same frequency, restore the receiver sensitivity of the micro base station, to make the uplink border of the macro base station and the micro base station return to an original location.

Based on the first and second optional embodiments corresponding to FIG. 7, in another embodiment of the network control apparatus provided by the embodiment of the present invention,
the processing unit 202 is specifically configured to directly or indirectly reduce a transmit power of the terminal when the terminal active in the communication service is in the macro-micro non-soft handover area.

Based on the first and second optional embodiments corresponding to FIG. 7, in another embodiment of the network control apparatus provided by the embodiment of the present invention,
the processing unit 202 is specifically configured to re-configure a power offset of a dedicated physical control channel of the macro base station when the terminal active in the communication service is in the macro-micro soft handover area.

The network control apparatus provided by the multiple embodiments of the present invention can all reduce interference caused by a terminal active in communication at an edge of a macro base station to a micro base station, and improve a service throughput rate of the macro base station.

An embodiment of the present invention further provides a computer storage medium, where the computer storage medium can store a program, and the program, when executed, includes a part of or all the steps of the method for processing a communication service recorded in the above embodiments.

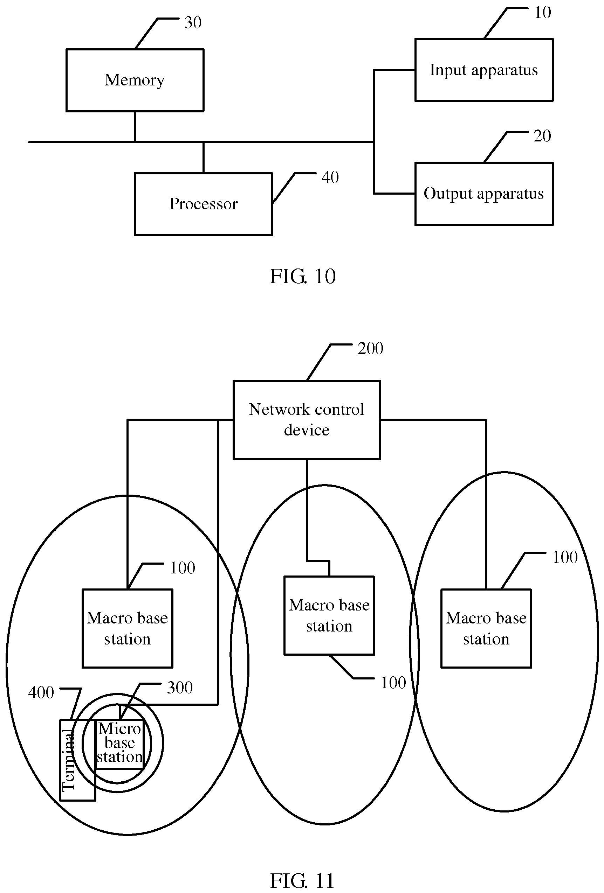

Referring to FIG. 10, an embodiment of a network control apparatus provided by the embodiment of the present invention includes an input apparatus 10, an output apparatus 20, a memory 30, and a processor 40.

The input apparatus 10, the output apparatus 20, the memory 30, and the processor 40 may be connected via a bus or in other manners.

The input apparatus 10 transmits received data to the memory 30, the processor 40 processes the data stored in the first memory 30, and the output apparatus 20 outputs the data processed by the processor 40.

The processor 40 executes the following steps:

determining whether there is a communication service in an area between an uplink border and a downlink border of a macro base station and a micro base station sharing a same frequency; and
when there is a communication service in the area between the uplink border and the downlink border of the macro base station and the micro base station, processing the communication service according to a preset rule.

In some embodiments of the present invention, the processor 40 further executes the following steps:

obtaining an intra-frequency measurement report, active set information of a terminal, or signal quality of the macro base station and signal quality of the micro base station at a location where a terminal is located which are carried in a radio resource control connection request initiated by the terminal.

In some embodiments of the present invention, the area between the uplink border and the downlink border of the macro base station and the micro base station is divided into a macro-micro non-soft handover area and a macro-micro soft handover area according to base station information contained in an active set maintained by the terminal, where, in the macro-micro non-soft handover area, the active set of the terminal contains information of only the macro base station, and in the macro-micro soft handover area, the active set of the terminal contains information of both the micro base station and the macro base station.

When obtaining an intra-frequency measurement report, the processor 40 determines that the terminal is already in a connected state when entering the area between the uplink border and the downlink border of the macro base station and the micro base station sharing a same frequency, and that the communication service of the terminal is in the macro-micro non-soft handover area.

In some embodiments of the present invention, the area between the uplink border and the downlink border of the macro base station and the micro base station is divided into a macro-micro non-soft handover area and a macro-micro soft handover area according to base station information contained in an active set maintained by the terminal, where, in the macro-micro non-soft handover area, the active set of the terminal contains information of only the macro base station, and in the macro-micro soft handover area, the active set of the terminal contains information of both the micro base station and the macro base station.

When obtaining the active set information of the terminal, and the active set information of the terminal contains information of both the macro base station and the micro base station, the processor 40 determines that the terminal is already in a connected state when entering the area between the uplink border and the downlink border of the macro base station and the micro base station sharing a same frequency, and that the communication service of the terminal is in the macro-micro soft handover area.

In some embodiments of the present invention, when the processor 40 obtains signal quality of the macro base station and signal quality of the micro base station at a location where a terminal is located which are carried in a radio resource control connection request initiated by the terminal, and a sum of the signal quality, which is carried in the radio resource control connection request, of the micro base station at the location where the terminal is located, and a fixed signal quality offset, is greater than or equal to the signal quality of the macro base station at the location where the terminal is located, the processor 40 determines that there is a communication service between the uplink border and the downlink border of the macro base station and the micro base station sharing a same frequency, and that the radio resource control connection request of the terminal is initiated in the area between the uplink border and the downlink border of the macro base station and the micro base station sharing a same frequency.

In some embodiments of the present invention, the processor 40 hands over the communication service to an inter-frequency co-coverage macro base station.

In some embodiments of the present invention, the processor 40 redirects the communication service to an inter-frequency co-coverage macro base station by using a radio resource control protocol.

In some embodiments of the present invention, the processor 40 obtains parameters used to calculate a desensitization intensity, and calculates a desensitization intensity according to the parameters used to calculate a desensitization intensity; and reduces a receiver sensitivity of the micro base station according to the calculated desensitization intensity, to make the uplink border and the downlink border of the macro base station and the micro base station coincide.

In some embodiments of the present invention, the processor 40 periodically queries communication services in the area between the uplink border and the downlink border of the macro base station and the micro base station sharing a same frequency, and when finding that there is no communication service in the area between the uplink border and the downlink border of the macro base station and the micro base station sharing a same frequency, restores the receiver sensitivity of the micro base station, to make the uplink border of the macro base station and the micro base station return to an original location.

In some embodiments of the present invention, the processor 40 directly or indirectly reduces a transmit power of the terminal when the terminal active in the communication service is in the macro-micro non-soft handover area.

In some embodiments of the present invention, the processor 40 re-configures a power offset of a dedicated physical control channel of the macro base station when the terminal active in the communication service is in the macro-micro soft handover area.

Referring to FIG. 11, an embodiment of a network system provided by the embodiment of the present invention includes: a macro base station 100, a network control apparatus 200, a micro base station 300, and a terminal 400.

The network control apparatus 200 controls multiple macro base stations 100 and micro base stations 300.

The network control apparatus 200 is configured to determine whether there is a communication service in an area between an uplink border and a downlink border of a macro base station and a micro base station sharing a same frequency; and when there is a communication service in the area between the uplink border and the downlink border of the macro base station and the micro base station, process the communication service according to a preset rule.

The terminal 400 is configured to perform a communication service.

The macro base station 100 is configured to control communication of the terminal.

The micro base station 300 is configured to control communication of the terminal.

A person of ordinary skill in the art can understand that all or a part of the steps of the methods in the foregoing embodiments may be implemented by a computer program instructing relevant hardware. The program may be stored in a computer readable storage medium. The storage medium may include a ROM, a RAM, a magnetic disk, or an optical disc.

**Claims**

1. A method for processing a communication service by a network control apparatus, comprising:

   determining (101) whether there is a communication service in an area between an uplink border and a downlink border of a macro base station and a micro base station sharing a same frequency; wherein the uplink border is defined as a location where signal to noise ratios, SNRs, of an uplink transmit signal of a terminal, reaching the macro base station side and the micro base station side are the same, and the downlink border is defined as a location where received signal code powers, RSCP, which are received by the terminal, of the pilot channels of the macro base station and the micro base station are the same; and
   when there is a communication service in the area between the uplink border and the downlink border of the macro base station and the micro base station, processing (102) the communication service according to a preset rule,

   wherein
   before the determining whether there is a communication service in an area between an uplink border and a downlink border of a macro base station and a micro base station sharing a same frequency, the method further comprises:

   obtaining an intra-frequency measurement report, active set information of the terminal, or signal quality of the macro base station and signal quality of the micro base station at a location where the terminal is located which are carried in a radio resource control connection request initiated by the terminal; and
   wherein
   the area between the uplink border and the downlink border of the macro base station and the micro base station is divided into a macro-micro non-soft handover area and a macro-micro soft handover area according to base station information contained in an active set maintained by the terminal, wherein, when the terminal is located in the macro-micro non-soft handover area, the active set of the terminal contains information of only the macro base station, and when the terminal is located in the macro-micro soft handover area, the active set of the terminal contains information of both the micro base station and the macro base station;
   wherein the preset rule includes one of the following plurality of cases:

   1) moving the uplink border of the macro base station and the micro base station through desensitization, to make the uplink border and the downlink border of the macro base station and the micro base station coincide;
   wherein desensitization is the reduction of receiver sensitivity,
   2) inter-frequency handover or redirecting,
   3) combining step 2) and step 1), where the operation in step 2) is executed first, and the operation of desensitization in step 1) is executed after the inter-frequency handover or redirecting fails; and
   4) directly or indirectly reducing a transmit power of the terminal when the terminal active in the communication service is in the macro-micro non-soft handover area; or reconfiguring a power offset of a dedicated physical control channel of the macro base station when the terminal active in the communication service is in the macro-micro soft handover area.

2. The method according to claim 1, wherein the determining whether there is a communication service in an area between an uplink border and a downlink border of a macro base station and a micro base station sharing a same frequency comprises:

when an intra-frequency measurement report is obtained, determining that the terminal is already in a connected state when entering the area between the uplink border and the downlink border of the macro base station and the micro base station sharing a same frequency, and that the communication service of the terminal is in the macro-micro non-soft handover area; or,

when the active set information of the terminal is obtained, and the active set information of the terminal contains information of both the macro base station and the micro base station, determining that the terminal is already in a connected state when entering the area between the uplink border and the downlink border of the macro base station and the micro base station sharing a same frequency, and that the communication service of the terminal is in the macro-micro soft handover area.

3. The method according to claim 1, wherein the determining whether there is a communication service in an area between an uplink border and a downlink border of macro base station and micro base station sharing a same frequency comprises:
when a sum of the signal quality of the micro base station at the location where the terminal is located, which is carried in the radio resource control connection request, and a fixed signal quality offset, is greater than or equal to the signal quality of the macro base station at the location where the terminal is located, determining that there is a communication service between the uplink border and the downlink border of the macro base station and the micro base station sharing a same frequency, and that the radio resource control connection request of the terminal is initiated in the area between the uplink border and the downlink border of the macro base station and the micro base station sharing a same frequency.

4. The method according to any one of claims 1 to 3, wherein the processing the communication service according to a preset rule specifically comprises:

obtaining parameters used to calculate a desensitization intensity, and calculating a desensitization intensity according to the parameters used to calculate a desensitization intensity, wherein the desensitization intensity is the amount that needs to be reduced from the receiver sensitivity of the micro base station, when the calculated desensitization intensity is subtracted from the original receiver sensitivity of the micro base station; and
reducing a receiver sensitivity of the micro base station according to the calculated desensitization intensity, to make the uplink border and the downlink border of the macro base station and the micro base station coincide.

5. The method according to claim 4, further comprising:

periodically querying communication services in the area between the uplink border and the downlink border of the macro base station and the micro base station sharing a same frequency; and
restoring the receiver sensitivity of the micro base station when it is found that there is no communication service in the area between the uplink border and the downlink border of the macro base station and the micro base station sharing a same frequency, such that the uplink border of the macro base station and the micro base station return to an original location.

6. A network control apparatus, comprising:

a determining unit (201), configured to determine whether there is a communication service in an area between an uplink border and a downlink border of a macro base station and a micro base station sharing a same frequency; wherein the uplink border is defined as a location where signal to noise ratios, SNRs, of an uplink transmit signal of a terminal, reaching the macro base station side and the micro base station side are the same, and the downlink border is defined as a location where received signal code powers, RSCP, which are received by the terminal, of the pilot channels of the macro base station and the micro base station are the same;
a processing unit (202), configured to: when the determining unit determines that there is a communication service in the area between the uplink border and the downlink border of the macro base station and the micro base station, process the communication service according to a preset rule; and
an obtaining unit,
wherein
the obtaining unit is configured to obtain, before the determining unit determines whether there is a communication service in the area between the uplink border and the downlink border of the macro base station and the micro base station sharing a same frequency, an intra-frequency measurement report, active set information of the terminal, or signal quality of the macro base station and signal quality of the micro base station at a location where the terminal is located which are carried in a radio resource control connection request initiated by the terminal; and
wherein
the area between the uplink border and the downlink border of the macro base station and the micro base station is divided into a macro-micro non-soft handover area and a macro-micro soft handover area according to base station information contained in an active set maintained by the terminal, wherein, when the terminal is located in the macro-micro non-soft handover area, the active set of the terminal contains information of only the macro base station, and when the terminal is located in the macro-micro soft handover area, the active set of the terminal contains information of both the micro base station and the macro base station;
wherein the preset rule includes one of the following plurality of cases:

1) moving the uplink border of the macro base station and the micro base station through desensitization, to make the uplink border and the downlink border of the macro base station and the micro base station coincide, and desensitization is the reduction of receiver sensitivity;
2) inter-frequency handover or redirecting;
3) combining step 2) and step 1), where the operation in step 2) is executed first, and the operation of desensitization in step 1) is executed after the inter-frequency handover or redirecting fails; and
4) directly or indirectly reducing a transmit power of the terminal when the terminal active in the communication service is in the macro-micro non-soft handover area; or reconfiguring a power offset of a dedicated physical control channel of the macro base station when the terminal active in the communication service is in the macro-micro soft handover area.

7. The apparatus according to claim 6, wherein the determining unit is configured to:

when the obtaining unit obtains an intra-frequency measurement report, determine that the terminal is already in a connected state when entering the area between the uplink border and the downlink border of the macro base station and the micro base station sharing a same frequency, and that the communication service of the terminal is in the macro-micro non-soft handover area; or,
when the obtaining unit obtains the active set information of the terminal, and the active set information of the terminal contains information of both the macro base station and the micro base station, determine that the terminal is already in a connected state when entering the area between the uplink border and the downlink border of the macro base station and the micro base station sharing a same frequency, and that the communication service of the terminal is in the macro-micro soft handover area.

8. The apparatus according to claim 6, wherein the determining unit is configured to:

when a sum of the signal quality of the micro base station at the location where the terminal is located, which is obtained by the obtaining unit and carried in the radio resource control connection request, and a fixed signal quality offset, is greater than or equal to the signal quality of the macro base station at the location where the terminal is located, determine that there is a communication service between the uplink border and the downlink border of the macro base station and the micro base station sharing a same frequency, and that the radio resource control connection request of the terminal is initiated in the area between the uplink border and the downlink border of the macro base station and the micro base station sharing a same frequency.

9. The apparatus according to any one of claims 6 to 8, wherein the processing unit comprises:

an obtaining subunit (2021), configured to obtain parameters used to calculate a desensitization intensity;
a calculating subunit (2022), configured to calculate a desensitization intensity according to the parameters obtained by the obtaining subunit and used to calculate a desensitization intensity, wherein the desensitization intensity is the amount that needs to be reduced from the receiver sensitivity of the micro base station, when the calculated desensitization intensity is subtracted from the original receiver sensitivity of the micro base station; and
a sensitivity adjusting unit (2023), configured to reduce a receiver sensitivity of the micro base station according to the desensitization intensity calculated by the calculating subunit, to make the uplink border and the downlink border of the macro base station and the micro base station coincide.

10. The apparatus according to claim 9, wherein the processing unit further comprises:

a query subunit (2024), configured to periodically query communication services in the area between the uplink border and the downlink border of the macro base station and the micro base station sharing a same frequency; and

the sensitivity adjusting unit is configured to: when the query subunit finds that there is no communication service in the area between the uplink border and the downlink border of the macro base station and the micro base station sharing a same frequency, restore the receiver sensitivity of the micro base station, such that the uplink border of the macro base station and the micro base station return to an original location.

11. A network system, comprising: a network control apparatus, a terminal, a macro base station, and a micro base station; wherein

the network control apparatus is the apparatus according to any one of claims 6 to 10.


**Patentansprüche**

1. Verfahren zum Verarbeiten eines Kommunikationsdienstes durch eine Netzsteuervorrichtung, umfassend:

Bestimmen (101), ob es in einem Bereich zwischen einer Aufwärtsstreckengrenze und einer Abwärtsstreckengrenze einer Makrobasisstation und einer Mikrobasisstation, die sich eine selbe Frequenz teilen, einen Kommunikationsdienst gibt; wobei die Aufwärtsstreckengrenze als ein Ort definiert ist, an dem Rauschabstände SNR eines Aufwärtsstrecken-Sendesignals eines Endgeräts, die die Makrobasisstationsseite und die Mikrobasisstationsseite erreichen, gleich sind, und die Abwärtsstreckengrenze als ein Ort definiert ist, an dem Empfangssignal-Codeleistungen RSCP der Pilotkanäle der Makrobasisstation und der Mikrobasisstation, die durch das Endgerät empfangen werden, gleich sind; und
wenn es einen Kommunikationsdienst in dem Bereich zwischen der Aufwärtsstreckengrenze und der Abwärtsstreckengrenze der Makrobasisstation und der Mikrobasisstation gibt, Verarbeiten (102) des Kommunikationsdienstes gemäß einer voreingestellten Regel, wobei
das Verfahren vor dem Bestimmen, ob es in einem Bereich zwischen einer Aufwärtsstreckengrenze und einer Abwärtsstreckengrenze einer Makrobasisstation und einer Mikrobasisstation, die sich eine selbe Frequenz teilen, einen Kommunikationsdienst gibt, ferner Folgendes umfasst:

Erhalten von einem Intrafrequenz-Messbericht, Aktivmengeninformationen des Endgeräts oder Signalqualität der Makrobasisstation und Signalqualität der Mikrobasisstation an einem Ort, an dem sich das Endgerät befindet, die in einer durch das Endgerät eingeleiteten Funkressourcensteuerungs-Verbindungsanforderung angeordnet sind; und
wobei
der Bereich zwischen der Aufwärtsstreckengrenze und der Abwärtsstreckengrenze der Makrobasisstation und der Mikrobasisstation gemäß Basisstationsinformationen, die in einer durch das Endgerät unterhaltenen aktiven Menge enthalten sind, in einen Makro-Mikro-Nicht-Soft-Weiterreichungsbereich und einen Makro-Mikro-Soft-Weiterreichungsbereich aufgeteilt wird, wobei, wenn sich das Endgerät in dem Makro-Mikro-Nicht-Soft-Weiterreichungsbereich befindet, die aktive Menge des Endgeräts Informationen nur der Makrobasisstation enthält, und wenn sich das Endgerät in dem Makro-Mikro-Soft-Weiterreichungsbereich befindet, die aktive Menge des Endgeräts Informationen sowohl der Mikrobasisstation als auch der Makrobasisstation enthält;

wobei die voreingestellte Regel die folgenden mehreren Fälle umfasst:

1) Bewegen der Aufwärtsstreckengrenze der Makrobasisstation und der Mikrobasisstation mittels Desensibilisierung, damit die Aufwärtsstreckengrenze und die Abwärtsstreckengrenze der Makrobasisstation und der Mikrobasisstation zusammenfallen; wobei Desensibilisierung die Verringerung der Empfängerempfindlichkeit ist,
2) frequenzübergreifendes Weiterreichen oder Umleiten;
3) Kombinieren von Schritt 2) und Schritt 1), wobei die Operation in Schritt 2) zuerst ausgeführt wird und die Operation der Desensibilisierung in Schritt 1) ausgeführt wird, nachdem das frequenzübergreifende Weiterreichen oder Umleiten fehlschlägt; und
4) direktes oder indirektes Verringern einer Sendeleistung des Endgeräts, wenn sich das in dem Kommunikationsdienst aktive Endgerät in dem Makro-Mikro-Nicht-Soft-Weiterreichungsbereich befindet; oder Umkonfigurieren eines Leistungsoffsets eines dedizierten physischen Steuerkanals der Makrobasisstation, wenn sich das in dem Kommunikationsdienst aktive Endgerät in dem Makro-Mikro-Soft-Weiterreichungsbereich befindet.

2. Verfahren nach Anspruch 1, wobei das Bestimmen, ob es in einem Bereich zwischen einer Aufwärtsstreckengrenze und einer Abwärtsstreckengrenze einer Makrobasisstation und einer Mikrobasisstation, die sich eine selbe Frequenz teilen, einen Kommunikationsdienst gibt, Folgendes umfasst:

wenn ein Intrafrequenz-Messbericht erhalten wird, Bestimmen, dass sich das Endgerät bereits in einem verbundenen Zustand befindet, wenn es in den Bereich zwischen der Aufwärtsstreckengrenze und der Abwärtsstreckengrenze der Makrobasisstation und der Mikrobasisstation, die sich eine selbe Frequenz teilen, eintritt, und dass der Kommunikationsdienst des Endgeräts sich in dem Makro-Mikro-Nicht-Soft-Weiterreichungsbereich befindet; oder
wenn die Aktivmengeninformationen des Endgeräts erhalten werden und die Aktivmengeninformationen des Endgeräts Informationen sowohl der Makrobasisstation als auch der Mikrobasisstation enthalten, Bestimmen, dass sich das Endgerät bereits in einem verbundenen Zustand befindet, wenn es in den Bereich zwischen der Aufwärtsstreckengrenze und der Abwärtsstreckengrenze der Makrobasisstation und der Mikrobasisstation, die sich eine selbe Frequenz teilen, eintritt, und dass der Kommunikationsdienst des Endgeräts sich in dem Makro-Mikro-Soft-Weiterreichungsbereich befindet.

3. Verfahren nach Anspruch 1, wobei das Bestimmen, ob es in einem Bereich zwischen einer Aufwärtsstreckengrenze und einer Abwärtsstreckengrenze einer Makrobasisstation und einer Mikrobasisstation, die sich eine selbe Frequenz teilen, einen Kommunikationsdienst gibt, Folgendes umfasst:
wenn eine Summe der Signalqualität der Mikrobasisstation an dem Ort, an dem sich das Endgerät befindet, die in der Funkressourcesteuerungs-Verbindungsanforderung geführt wird, und eines festen Signalqualitätsoffsets größer oder gleich der Signalqualität der Makrobasisstation an dem Ort ist, an dem sich das Endgerät befindet, Bestimmen, dass es einen Kommunikationsdienst zwischen der Aufwärtsstreckengrenze und der Abwärtsstreckengrenze der Makrobasisstation und der Mikrobasisstation, die sich eine selbe Frequenz teilen, gibt und dass die Funkressourcensteuerungs-Verbindungsanforderung des Endgeräts in dem Bereich zwischen der Aufwärtsstreckengrenze und der Abwärtsstreckengrenze der Makrobasisstation und der Mikrobasisstation, die sich eine selbe Frequenz teilen, eingeleitet wird.

4. Verfahren nach einem der Ansprüche 1 bis 3, wobei das Verarbeiten des Kommunikationsdienstes gemäß einer voreingestellten Regel speziell Folgendes umfasst:

Erhalten von zur Berechnung einer Desensibilisierungsintensität verwendeten Parametern und Berechnen einer Desensibilisierungsintensität gemäß der zur Berechnung einer Desensibilisierungsintensität verwendeten Parameter, wobei die Desensibilisierungsintensität der Betrag ist, der von der Empfängerempfindlichkeit der Mikrobasisstation zu reduzieren ist, wenn die berechnete Desensibilisierungsintensität von der ursprünglichen Empfängerempfindlichkeit der Mikrobasisstation subtrahiert wird; und
Verringern einer Empfängerempfindlichkeit der Mikrobasisstation gemäß der berechneten Desensibilisierungsintensität, damit die Aufwärtsstreckengrenze und die Abwärtsstreckengrenze der Makrobasisstation und der Mikrobasisstation zusammenfallen.

5. Verfahren nach Anspruch 4, ferner umfassend:

periodisches Abfragen von Kommunikationsdiensten in dem Bereich zwischen der Aufwärtsstreckengrenze und der Abwärtsstreckengrenze der Makrobasisstation und der Mikrobasisstation, die sich eine selbe Frequenz teilen; und
Wiederherstellen der Empfängerempfindlichkeit der Mikrobasisstation, wenn gefunden wird, dass es keinen Kommunikationsdienst in dem Bereich zwischen der Aufwärtsstreckengrenze und der Abwärtsstreckengrenze der Makrobasisstation und der Mikrobasisstation, die sich eine selbe Frequenz teilen, gibt, so dass die Aufwärtsstreckengrenze der Makrobasisstation und der Mikrobasisstation zu einem ursprünglichen Ort zurückkehren.

6. Netzsteuervorrichtung, umfassend:

eine Bestimmungseinheit (201), ausgelegt zum Bestimmen, ob es in einem Bereich zwischen einer Aufwärtsstreckengrenze und einer Abwärtsstreckengrenze einer Makrobasisstation und einer Mikrobasisstation, die sich eine selbe Frequenz teilen, einen Kommunikationsdienst gibt; wobei die Aufwärtsstreckengrenze als ein Ort definiert ist, an dem Rauschabstände SNR eines Aufwärtsstrecken-Sendesignals eines Endgeräts, die die Makrobasisstationsseite und die Mikrobasisstationsseite erreichen, gleich sind, und die Abwärtsstreckengrenze als ein Ort definiert ist, an dem Empfangssignal-Codeleistungen RSCP der Pilotkanäle der Makrobasisstation und der Mikrobasisstation, die durch das Endgerät empfangen werden, gleich sind; eine Verarbeitungseinheit (202), die für Folgendes ausgelegt ist: wenn die Bestimmungeinheit bestimmt, dass es einen Kommunikationsdienst in dem Bereich zwischen der Aufwärtsstreckengrenze und der Abwärtsstreckengrenze der Makrobasisstation und der Mikrobasisstation gibt, Verarbeiten (102) des Kommunikationsdienstes gemäß einer voreingestellten Regel, und eine Erhalteeinheit, wobei

die Erhalteeinheit dafür ausgelegt ist, bevor die Bestimmungeinheit bestimmt, ob es einen Kommunikationsdienst im Bereich zwischen der Aufwärtsstreckengrenze und der Abwärtsstreckengrenze der Makrobasisstation und der Mikrobasisstation, die sich eine selbe Frequenz teilen, gibt, einen Intrafrequenz-Messbericht, Aktivmengeninformationen des Endgeräts oder Signalqualität der Makrobasisstation und Signalqualität der Mikrobasisstation an einem Ort, an dem sich das Endgerät befindet, die in einer durch das Endgerät eingeleiteten Funkressourcensteuerungs-Verbindungsanforderung geführt werden, zu erhalten; und wobei

der Bereich zwischen der Aufwärtsstreckengrenze und der Abwärtsstreckengrenze der Makrobasisstation und der Mikrobasisstation gemäß Basisstationsinformationen, die in einer durch das Endgerät unterhaltenen aktiven Menge enthalten sind, in einen Makro-Mikro-Nicht-Soft-Weiterreichungsbereich und einen Makro-Mikro-Soft-Weiterreichungsbereich aufgeteilt wird, wobei, wenn sich das Endgerät in dem Makro-Mikro-Nicht-Soft-Weiterreichungsbereich befindet, die aktive Menge des Endgeräts Informationen nur der Makrobasisstation enthält, und wenn sich das Endgerät in dem Makro-Mikro-Soft-Weiterreichungsbereich befindet, die aktive Menge des Endgeräts Informationen sowohl der Mikrobasisstation als auch der Makrobasisstation enthält; wobei die voreingestellte Regel die folgenden mehreren Fälle umfasst:

1) Bewegen der Aufwärtsstreckengrenze der Makrobasisstation und der Mikrobasisstation mittels Desensibilisierung, damit die Aufwärtsstreckengrenze und die Abwärtsstreckengrenze der Makrobasisstation und der Mikrobasisstation zusammenfallen; wobei Desensibilisierung die Verringerung der Empfängerempfindlichkeit ist,

2) frequenzübergreifendes Weiterreichen oder Umleiten;

3) Kombinieren von Schritt 2) und Schritt 1), wobei die Operation in Schritt 2) zuerst ausgeführt wird und die Operation der Desensibilisierung in Schritt 1) ausgeführt wird, nachdem das frequenzübergreifende Weiterreichen oder Umleiten fehlschlägt; und

4) direktes oder indirektes Verringern einer Sendeleistung des Endgeräts, wenn sich das in dem Kommunikationsdienst aktive Endgerät in dem Makro-Mikro-Nicht-Soft-Weiterreichungsbereich befindet; oder Umkonfigurieren eines Leistungsoffsets eines dedizierten physischen Steuerkanals der Makrobasisstation, wenn sich das in dem Kommunikationsdienst aktive Endgerät in dem Makro-Mikro-Soft-Weiterreichungsbereich befindet.

7.  Vorrichtung nach Anspruch 6, wobei die Bestimmungeinheit für Folgendes ausgelegt ist:

wenn die Erhalteeinheit einen Intrafrequenz-Messbericht erhält, Bestimmen, dass sich das Endgerät bereits in einem verbundenen Zustand befindet, wenn es in den Bereich zwischen der Aufwärtsstreckengrenze und der Abwärtsstreckengrenze der Makrobasisstation und der Mikrobasisstation, die sich eine selbe Frequenz teilen, eintritt, und dass der Kommunikationsdienst des Endgeräts sich in dem Makro-Mikro-Nicht-Soft-Weiterreichungsbereich befindet; oder
wenn die Erhalteeinheit die Aktivmengeninformationen des Endgeräts erhält und die Aktivmengeninformationen des Endgeräts Informationen sowohl der Makrobasisstation als auch der Mikrobasisstation enthalten, Bestimmen, dass sich das Endgerät bereits in einem verbundenen Zustand befindet, wenn es in den Bereich zwischen der Aufwärtsstreckengrenze und der Abwärtsstreckengrenze der Makrobasisstation und der Mikrobasisstation, die sich eine selbe Frequenz teilen, eintritt, und dass der Kommunikationsdienst des Endgeräts sich in dem Makro-Mikro-Soft-Weiterreichungsbereich befindet.

8.  Vorrichtung nach Anspruch 6, wobei die Bestimmungeinheit für Folgendes ausgelegt ist:
wenn eine Summe der Signalqualität der Mikrobasisstation an dem Ort, an dem sich das Endgerät befindet, die durch die Erhalteeinheit erhalten wird und in der Funkressourcesteuerungs-Verbindungsanforderung geführt wird, und eines festen Signalqualitätsoffsets größer oder gleich der Signalqualität der Makrobasisstation an dem Ort ist, an dem sich das Endgerät befindet, Bestimmen, dass es einen Kommunikationsdienst zwischen der Aufwärtsstreckengrenze und der Abwärtsstreckengrenze der Makrobasisstation und der Mikrobasisstation, die sich eine selbe Frequenz teilen, gibt und dass die Funkressourcensteuerungs-Verbindungsanforderung des Endgeräts in dem Bereich zwischen der Aufwärtsstreckengrenze und der Abwärtsstreckengrenze der Makrobasisstation und der Mikrobasisstation, die sich eine selbe Frequenz teilen, eingeleitet wird.

9. Vorrichtung nach einem der Ansprüche 6 bis 8, wobei die Verarbeitungseinheit Folgendes umfasst:

eine Erhalte-Subeinheit (2021), ausgelegt zum Erhalten von zur Berechnung einer Desensibilisierungsintensität verwendeten Parametern;
eine Berechnungs-Subeinheit (2022), ausgelegt zum Berechnen einer Desensibilisierungsintensität gemäß der zur Berechnung einer Desensibilisierungsintensität verwendeten und durch die Erhalte-Subeinheit erhaltenen Parameter, wobei die Desensibilisierungsintensität der Betrag ist, der von der Empfängerempfindlichkeit der Mikrobasisstation zu reduzieren ist, wenn die berechnete Desensibilisierungsintensität von der ursprünglichen Empfängerempfindlichkeit der Mikrobasisstation subtrahiert wird; und
eine Empfindlichkeits-Justiereinheit (2023), ausgelegt zum Verringern einer Empfängerempfindlichkeit der Mikrobasisstation gemäß der durch die Berechnungs-Subeinheit berechneten Desensibilisierungsintensität, damit die Aufwärtsstreckengrenze und die Abwärtsstreckengrenze der Makrobasisstation und der Mikrobasisstation zusammenfallen.

10. Vorrichtung nach Anspruch 9, wobei die Verarbeitungseinheit ferner Folgendes umfasst:

eine Abfrage-Subeinheit (2024), ausgelegt zum periodischen Abfragen von Kommunikationsdiensten in dem Bereich zwischen der Aufwärtsstreckengrenze und der Abwärtsstreckengrenze der Makrobasisstation und der Mikrobasisstation, die sich eine selbe Frequenz teilen; und
die Empfindlichkeits-Justiereinheit für Folgendes ausgelegt ist: wenn die Abfrage-Subeinheit findet, dass es keinen Kommunikationsdienst in dem Bereich zwischen der Aufwärtsstreckengrenze und der Abwärtsstreckengrenze der Makrobasisstation und der Mikrobasisstation, die sich eine selbe Frequenz teilen, gibt, Wiederherstellen der Empfängerempfindlichkeit der Mikrobasisstation, so dass die Aufwärtsstreckengrenze der Makrobasisstation und der Mikrobasisstation zu einem ursprünglichen Ort zurückkehren.

11. Netzsystem, umfassend: eine Netzsteuervorrichtung, ein Endgerät, eine Makrobasisstation und eine Mikrobasisstation; wobei
die Netzsteuervorrichtung die Vorrichtung nach einem der Ansprüche 6 bis 10 ist.

**Revendications**

1. Procédé permettant de traiter un service de communication par un appareil de contrôle réseau, comprenant les étapes suivantes :

déterminer (101) s'il y a un service de communication dans une zone entre une limite de liaison montante et une limite de liaison descendante d'une macro station de base et d'une micro station de base partageant une même fréquence ; la limite de liaison montante étant définie comme un emplacement où des rapports signal/bruit, SNR, d'un signal de transmission de liaison montante d'un terminal, atteignant le côté macro station de base et le côté micro station de base sont les mêmes, et la limite de liaison descendante étant définie comme un emplacement où des puissances de code de signal reçu, RSCP, qui sont reçues par le terminal, des canaux pilotes de la macro station de base et de la micro station de base sont les mêmes ; et
lorsqu'il y a un service de communication dans la zone entre la limite de liaison montante et la limite de liaison descendante de la macro station de base et de la micro station de base, traiter (102) le service de communication selon une règle prédéfinie, avant l'étape consistant à déterminer s'il y a un service de communication dans une zone entre une limite de liaison montante et une limite de liaison descendante d'une macro station de base et d'une micro station de base partageant une même fréquence, le procédé comprenant en outre :

obtenir un rapport de mesure intra-fréquence, des informations d'ensemble actif du terminal, ou une qualité de signal de la macro station de base et une qualité de signal de la micro station de base à un emplacement où le terminal est situé qui sont contenus dans une requête de connexion de contrôle de ressource radio initiée par le terminal ; et
la zone entre la limite de liaison montante et la limite de liaison descendante de la macro station de base et de la micro station de base étant divisée en une zone de transfert intercellulaire macro/micro non sans coupure et une zone de transfert intercellulaire macro/micro sans coupure selon des informations de station de base contenues dans un ensemble actif maintenu par le terminal ; lorsque le terminal est situé dans la zone de transfert intercellulaire macro/micro non sans coupure, l'ensemble actif du terminal contenant des informations de la macro station de base uniquement, et lorsque le terminal est situé dans la zone de transfert intercellulaire macro/micro sans coupure, l'ensemble actif du terminal contenant des informations de la micro station de base ainsi que de la macro station de base ;

la règle prédéfinie comportant la pluralité suivante de cas :

1) déplacer la limite de liaison montante de la macro station de base et de la micro station de base par l'intermédiaire d'une désensibilisation, pour faire coïncider la limite de liaison montante et la limite de liaison descendante de la macro station de base et de la micro station de base ;
une désensibilisation étant la réduction de la sensibilité de récepteur,
2) transfert intercellulaire ou redirection inter-fréquence ;
3) combiner l'étape 2) et l'étape 1), l'opération de l'étape 2) étant exécutée en premier, et l'opération de désensibilisation de l'étape 1) étant exécutée après l'échec du transfert intercellulaire ou de la redirection inter-fréquence ; et
4) réduire directement ou indirectement une puissance de transmission du terminal lorsque le terminal actif dans le service de communication est dans la zone de transfert intercellulaire macro/micro non sans coupure ; ou reconfigurer un décalage de puissance d'un canal de contrôle physique dédié de la macro station de base lorsque le terminal actif dans le service de communication est dans la zone de transfert intercellulaire macro/micro sans coupure.

2. Procédé selon la revendication 1, dans lequel l'étape consistant à déterminer s'il y a un service de communication dans une zone entre une limite de liaison montante et une limite de liaison descendante d'une macro station de base et d'une micro station de base partageant une même fréquence comprend :

lorsqu'un rapport de mesure intra-fréquence est obtenu, déterminer que le terminal est déjà dans un état connecté lorsqu'il entre dans la zone entre la limite de liaison montante et la limite de liaison descendante de la macro station de base et de la micro station de base partageant une même fréquence, et que le service de communication du terminal est dans la zone de transfert intercellulaire macro/micro non sans coupure ; ou, lorsque les informations d'ensemble actif du terminal sont obtenues, et que les informations d'ensemble actif du terminal contiennent des informations de la macro station de base ainsi que de la micro station de base, déterminer que le terminal est déjà dans un état connecté lorsqu'il entre dans la zone entre la limite de liaison montante et la limite de liaison descendante de la macro station de base et de la micro station de base partageant une même fréquence, et que le service de communication du terminal est dans la zone de transfert intercellulaire macro/micro sans coupure.

3. Procédé selon la revendication 1, dans lequel l'étape consistant à déterminer s'il y a un service de communication dans une zone entre une limite de liaison montante et une limite de liaison descendante d'une macro station de base et d'une micro station de base partageant une même fréquence comprend :
lorsqu'une somme de la qualité de signal de la micro station de base à l'emplacement où le terminal est situé, qui est contenue dans la requête de connexion de contrôle de ressource radio, et d'un décalage de qualité de signal fixe, est supérieure ou égale à la qualité de signal de la macro station de base à l'emplacement où le terminal est situé, déterminer qu'il y a un service de communication entre la limite de liaison montante et la limite de liaison descendante de la macro station de base et de la micro station de base partageant une même fréquence, et que la requête de connexion de contrôle de ressource radio du terminal est initiée dans la zone entre la limite de liaison montante et la limite de liaison descendante de la macro station de base et de la micro station de base partageant une même fréquence.

4. Procédé selon l'une quelconque des revendications 1 à 3, dans lequel l'étape consistant à traiter le service de communication selon une règle prédéfinie comprend spécifiquement :

obtenir des paramètres utilisés pour calculer une intensité de désensibilisation, et calculer une intensité de désensibilisation selon les paramètres utilisés pour calculer une intensité de désensibilisation, l'intensité de désensibilisation étant la quantité qui doit être réduite à partir de la sensibilité de récepteur de la micro station de base, lorsque l'intensité de désensibilisation calculée est soustraite de la sensibilité de récepteur originale de la micro station de base ; et

réduire une sensibilité de récepteur de la micro station de base selon l'intensité de désensibilisation calculée, pour faire coïncider la limite de liaison montante et la limite de liaison descendante de la macro station de base et de la micro station de base.

**5.** Procédé selon la revendication 4, comprenant en outre :

interroger périodiquement des services de communication dans la zone entre la limite de liaison montante et la limite de liaison descendante de la macro station de base et de la micro station de base partageant une même fréquence ; et

restaurer la sensibilité de récepteur de la micro station de base lorsqu'il est trouvé qu'il n'y a pas de service de communication dans la zone entre la limite de liaison montante et la limite de liaison descendante de la macro station de base et de la micro station de base partageant une même fréquence, afin que la limite de liaison montante de la macro station de base et de la micro station de base retourne à un emplacement original.

**6.** Appareil de contrôle réseau, comprenant :

une unité de détermination (201), configurée pour déterminer s'il y a un service de communication dans une zone entre une limite de liaison montante et une limite de liaison descendante d'une macro station de base et d'une micro station de base partageant une même fréquence ; la limite de liaison montante étant définie comme un emplacement où des rapports signal/bruit, SNR, d'un signal de transmission de liaison montante d'un terminal, atteignant le côté macro station de base et le côté micro station de base sont les mêmes, et la limite de liaison descendante étant définie comme un emplacement où des puissances de code de signal reçu, RSCP, qui sont reçues par le terminal, des canaux pilotes de la macro station de base et de la micro station de base sont les mêmes ;

une unité de traitement (202), configurée pour : lorsque l'unité de détermination détermine qu'il y a un service de communication dans la zone entre la limite de liaison montante et la limite de liaison descendante de la macro station de base et de la micro station de base, traiter le service de communication selon une règle prédéfinie, et

une unité d'obtention, l'unité d'obtention étant configurée pour obtenir, avant que l'unité de détermination détermine s'il y a un service de communication dans la zone entre la limite de liaison montante et la limite de liaison descendante de la macro station de base et de la micro station de base partageant une même fréquence, un rapport de mesure intra-fréquence, des informations d'ensemble actif du terminal, ou une qualité de signal de la macro station de base et une qualité de signal de la micro station de base à un emplacement où le terminal est situé qui sont contenus dans une requête de connexion de contrôle de ressource radio initiée par le terminal ; et

la zone entre la limite de liaison montante et la limite de liaison descendante de la macro station de base et de la micro station de base étant divisée en une zone de transfert intercellulaire macro/micro non sans coupure et une zone de transfert intercellulaire macro/micro sans coupure selon des informations de station de base contenues dans un ensemble actif maintenu par le terminal ; lorsque le terminal est situé dans la zone de transfert intercellulaire macro/micro non sans coupure, l'ensemble actif du terminal contenant des informations de la macro station de base uniquement, et lorsque le terminal est situé dans la zone de transfert intercellulaire macro/micro sans coupure, l'ensemble actif du terminal contenant des informations de la micro station de base ainsi que de la macro station de base ;

la règle prédéfinie comportant la pluralité suivante de cas :

1) déplacer la limite de liaison montante de la macro station de base et de la micro station de base par l'intermédiaire d'une désensibilisation, pour faire coïncider la limite de liaison montante et la limite de liaison descendante de la macro station de base et de la micro station de base, et une désensibilisation étant la réduction de la sensibilité de récepteur ;

2) transfert intercellulaire ou redirection inter-fréquence ;

3) combiner l'étape 2) et l'étape 1), l'opération de l'étape 2) étant exécutée en premier, et l'opération de désensibilisation de l'étape 1) étant exécutée après l'échec du transfert intercellulaire ou de la redirection inter-fréquence ; et

4) réduire directement ou indirectement une puissance de transmission du terminal lorsque le terminal actif dans le service de communication est dans la zone de transfert intercellulaire macro/micro non sans coupure ; ou reconfigurer un décalage de puissance d'un canal de contrôle physique dédié de la macro station de base lorsque le terminal actif dans le service de communication est dans la zone de transfert intercellulaire macro/micro sans coupure.

7. Appareil selon la revendication 6, dans lequel l'unité de détermination est configurée pour :

lorsque l'unité d'obtention obtient un rapport de mesure intra-fréquence, déterminer que le terminal est déjà dans un état connecté lorsqu'il entre dans la zone entre la limite de liaison montante et la limite de liaison descendante de la macro station de base et de la micro station de base partageant une même fréquence, et que le service de communication du terminal est dans la zone de transfert intercellulaire macro/micro non sans coupure ; ou,

lorsque l'unité d'obtention obtient les informations d'ensemble actif du terminal, et que les informations d'ensemble actif du terminal contiennent des informations de la macro station de base ainsi que de la micro station de base, déterminer que le terminal est déjà dans un état connecté lorsqu'il entre dans la zone entre la limite de liaison montante et la limite de liaison descendante de la macro station de base et de la micro station de base partageant une même fréquence, et que le service de communication du terminal est dans la zone de transfert intercellulaire macro/micro sans coupure.

8. Appareil selon la revendication 6, dans lequel l'unité de détermination est configurée, pour :
lorsqu'une somme de la qualité de signal de la micro station de base à l'emplacement où le terminal est situé, qui est obtenue par l'unité d'obtention et contenue dans la requête de connexion de contrôle de ressource radio, et d'un décalage de qualité de signal fixe, est supérieure ou égale à la qualité de signal de la macro station de base à l'emplacement où le terminal est situé, déterminer qu'il y a un service de communication entre la limite de liaison montante et la limite de liaison descendante de la macro station de base et de la micro station de base partageant une même fréquence, et que la requête de connexion de contrôle de ressource radio du terminal est initiée dans la zone entre la limite de liaison montante et la limite de liaison descendante de la macro station de base et de la micro station de base partageant une même fréquence.

9. Appareil selon l'une quelconque des revendications 6 à 8, dans lequel l'unité de traitement comprend :

une sous-unité d'obtention (2021), configurée pour obtenir des paramètres utilisés pour calculer une intensité de désensibilisation ;
une sous-unité de calcul (2022), configurée pour calculer une intensité de désensibilisation selon les paramètres obtenus par la sous-unité d'obtention et utilisés pour calculer une intensité de désensibilisation, l'intensité de désensibilisation étant la quantité qui doit être réduite à partir de la sensibilité de récepteur de la micro station de base, lorsque l'intensité de désensibilisation calculée est soustraite de la sensibilité de récepteur originale de la micro station de base ; et
une unité d'ajustement de sensibilité (2023), configurée pour réduire une sensibilité de récepteur de la micro station de base selon l'intensité de désensibilisation calculée par la sous-unité de calcul, pour faire coïncider la limite de liaison montante et la limite de liaison descendante de la macro station de base et de la micro station de base.

10. Appareil selon la revendication 9, dans lequel l'unité de traitement comprend en outre :

une sous-unité d'interrogation (2024), configurée pour interroger périodiquement des services de communication dans la zone entre la limite de liaison montante et la limite de liaison descendante de la macro station de base et de la micro station de base partageant une même fréquence ; et
l'unité d'ajustement de sensibilité est configurée pour : lorsque la sous-unité d'interrogation trouve qu'il n'y a pas de service de communication dans la zone entre la limite de liaison montante et la limite de liaison descendante de la macro station de base et de la micro station de base partageant une même fréquence, restaurer la sensibilité de récepteur de la micro station de base, afin que la limite de liaison montante de la macro station de base et de la micro station de base retourne à un emplacement original.

11. Système de réseau, comprenant : un appareil de contrôle réseau, un terminal, une macro station de base, et une micro station de base ;
l'appareil de contrôle réseau étant l'appareil selon l'une quelconque des revendications 6 à 10.

A network control device determinines whether there is a communication service in an area between an uplink border and a downlink border of a macro base station and a micro base station sharing a same frequency ⟋⎯ 101

When there is a communication service in the area between the uplink border and the downlink border of the macro base station and the micro base station, process the communication service according to a preset rule ⟋⎯ 102

FIG. 1

⎯ 100

Macro base
station

Macro-micro
non-soft
handover
area

Macro-
micro soft
handover
area

⎯ 300

Uplink border          Downlink border          Micro base station

FIG. 2

Macro base station

Micro base station ⌐ 300

⌐ 100

Micro base station ⌐ 300

⌐ 300 Micro base station

## FIG. 3

⌐ 200

Network control device

Macro-micro non-soft handover area

Macro-micro soft handover area

⌐ 100

400 ⌐ Terminal

Micro base station ⌐ 300

Macro base station

⌐ 300 Micro base station

Micro base station ⌐ 300

⌐ 300 Micro base station

## FIG. 4

EP 2 892 265 B1

FIG. 5

FIG. 6

FIG. 7

28

202

Processing unit

2021

Obtaining subunit

2022

Calculating
subunit

2023

Sensitivity
adjusting subunit

FIG. 8

202

2021

Obtaining subunit

2022

Calculating
subunit

2023

Sensitivity
adjusting subunit

2024

Query subunit

Processing unit

FIG. 9

30 — Memory

40 — Processor

10 — Input apparatus

20 — Output apparatus

FIG. 10

200 — Network control device

100 — Macro base station

100 — Macro base station

100 — Macro base station

400 — Terminal

300 — Micro base station

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2482734 A
- US 20117312319 A1
- EP 1734780 A2
- US 2005130662 A1
- US 2010035647 A1
- EP 2136593 A2